(19) Europäisches Patentamt / European Patent Office / Office européen des brevets

(11) **EP 4 410 411 A1**

(12) **EUROPEAN PATENT APPLICATION**
published in accordance with Art. 153(4) EPC

(43) Date of publication:
**07.08.2024 Bulletin 2024/32**

(21) Application number: **22876095.5**

(22) Date of filing: **26.09.2022**

(51) International Patent Classification (IPC):
**B01D 69/00** (2006.01)   **B01D 69/08** (2006.01)
**B01D 69/12** (2006.01)   **B01D 71/16** (2006.01)
**B01D 71/34** (2006.01)

(52) Cooperative Patent Classification (CPC):
**B01D 69/00; B01D 69/08; B01D 69/12;
B01D 71/16; B01D 71/34**

(86) International application number:
**PCT/JP2022/035592**

(87) International publication number:
**WO 2023/054228 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.09.2021 JP 2021157467**

(71) Applicant: **Toray Industries, Inc.
Tokyo 103-8666 (JP)**

(72) Inventors:
• **SHIMURA, Shun**
  **Otsu-shi, Shiga 520-8558 (JP)**
• **SATO, Ryo**
  **Otsu-shi, Shiga 520-8558 (JP)**
• **HANAKAWA, Masayuki**
  **Otsu-shi, Shiga 520-8558 (JP)**
• **KITABATA, Masahiro**
  **Otsu-shi, Shiga 520-8558 (JP)**
• **YAMAMOTO, Naoki**
  **Otsu-shi, Shiga 520-8558 (JP)**

(74) Representative: **Hoefer & Partner Patentanwälte mbB
Pilgersheimer Straße 20
81543 München (DE)**

(54) **POROUS MEMBRANE AND METHOD FOR MANUFACTURING POROUS MEMBRANE**

(57)   Conventional porous membranes have a mesh structure having a relatively large pore diameter in order to improve the removability of a relatively large component such as a virus. When a contaminative liquid to be filtered is filtered, contaminants are easily accumulated in the porous membranes, clogging or the like occurs in the porous membranes, and contamination of the porous membranes easily occurs. Accordingly, an object is to provide a porous membrane having high contamination resistance and highprecision removability. To achieve the object, provided is a porous membrane including, in at least one surface, a surface portion spanning 10 $\mu$m in thickness from the surface, being denser than an inner portion, and having a removal rate T of dextran having a weight-average molecular weight of 40,000 Da of 60 to 95%, in which a number of surface pores per unit area observed on the surface of the surface portion is 200 pores/$\mu$m$^2$ to 2,000 pores/$\mu$m$^2$.

[FIG. 1]

EP 4 410 411 A1

**Description**

TECHNICAL FIELD

The present invention relates to a porous membrane and a method for manufacturing a porous membrane.

BACKGROUND ART

In recent years, porous membranes such as microfiltration membranes and ultrafiltration membranes are used in various fields such as water treatment fields such as water purification and wastewater treatment, medical fields such as blood purification, and food industry fields. Recently, there has been a demand for a porous membrane that can efficiently filter a "contaminative liquid to be filtered" that has been considered to be difficult to filter, and has high resistance to contamination. The contaminative liquid to be filtered that easily contaminates the porous membrane is characterized in that the amount of contaminants contained in the liquid to be filtered is larger than in conventional liquids. The contaminants often include a coarse component (Stokes diameter: 13 nm or more) to be removed and a fine component (molecular weight: 10,000 Da or less) that is not to be removed but preferably permeates because it is a useful substance or the like.

The resistance to contamination of the porous membrane means that when high-precision removal is performed, a problem such as clogging of voids of the porous membrane can be reduced for contaminants or both coarse components and fine components as objects to be removed, and removal efficiency of the objects to be removed and water permeability can be stably maintained for a long time.

As a porous membrane exhibiting contamination resistance, Patent Document 1 discloses a porous membrane having both a high removal rate of an object and a high permeability coefficient of water by having a three-dimensional network structure having huge pores.

In addition, Patent Document 2 discloses a technique for improving a removal rate of an object such as a virus by reducing a pore diameter of a three-dimensional network structure. The three-dimensional network structure disclosed in Patent Document 2 has an average diameter of 0.01 $\mu$m or more and 1 um or less and does not substantially have macrovoids of 5 $\mu$m or more.

PRIOR ART DOCUMENT

PATENT DOCUMENTS

Patent Document 1: Japanese Patent Laid-open Publication No. 2006-82006
Patent Document 2: Japanese Patent Laid-open Publication No. 2010-94670

SUMMARY OF THE INVENTION

PROBLEMS TO BE SOLVED BY THE INVENTION

However, in the three-dimensional network structure having huge pores as described in Patent Document 1, since the average pore diameter is large and the three-dimensional structure has a cobweb-like shape, coarse components enter the porous membrane and contaminate the porous membrane. In addition, since fine particles are supplemented in the gaps of the entangled fine thread-like structure, the porous membrane is easily clogged, and the contamination resistance has not been sufficient. The porous membrane described in Patent Document 2 is intended to remove a relatively large component such as a virus and merely improves removability, and the network structure has a relatively large pore diameter and a small number of pores. Therefore, contaminants are likely to accumulate in the porous membrane, and the contamination resistance is sacrificed for a contaminative liquid to be filtered.

On the other hand, with respect to the contaminative liquid to be filtered as described above, filtration is difficult because the porous membrane is remarkably contaminated. For such a contaminative liquid to be filtered, a porous membrane having high contamination resistance that enables filtration is required.

Therefore, an object of the present invention is to provide a porous membrane having excellent contamination resistance by removing coarse components on the outer surface of the porous membrane and allowing fine components to efficiently permeate the porous membrane. The outer surface is a surface portion of the porous membrane, in other words, an outer surface of the surface layer opposite to the inner portion.

SOLUTIONS TO THE PROBLEMS

To solve the problems described above, the present invention provides a porous membrane having the following configurations.

1. A porous membrane including, in at least one surface, a surface portion spanning 10 $\mu$m in thickness from the surface, being denser than an inner portion, and having a removal rate T of dextran having a weight-average molecular weight of 40,000 Da of 60% to 95%, in which a number of pores (hereinafter referred to as surface pores) per unit area observed on the surface of the surface portion is 200 pores/$\mu$m$^2$ to 2,000 pores/$\mu$m$^2$.

2. The porous membrane according to item 1, in which an average value of surface pore diameters [nm] of the surface portion is 5.0 nm to 12 nm.

3. The porous membrane according to item 1 or 2, in which a value X obtained by dividing the number of the surface pores per unit area [pores/$\mu$m$^2$] by an average value of the surface pore diameters [nm] is 30 to 100 pores/$\mu$m$^2$/nm.

4. The porous membrane according to any one of items 1 to 3, in which the surface portion has a tortuosity R represented by Formula (1) of 1.0 to 8.0:

$$R = (\varepsilon/2k)^{1/2} \cdot V/S \quad \cdots\cdots \quad \text{Formula (1),}$$

where

$\varepsilon$: porosity, k: permeability coefficient [m$^2$],
V: pore specific volume [m$^3$/g], S: specific surface area [m$^2$/g], and
the permeability coefficient k is a coefficient calculated from Formula (2) using a pure water permeation amount Q [cm$^3$/sec] per membrane area A [m$^2$] at a pressure P [Pa] at 25°C:

$$k = 8.76 \times Q/A/P \times 10^{-15} \quad \cdots\cdots \quad \text{Formula (2).}$$

5. The porous membrane according to any one of items 1 to 4, the porous membrane having, in an outermost surface portion spanning 2 $\mu$m in thickness from the surface of the surface portion, a nano-network structure having a number of pores (hereinafter referred to as sectional pores) per unit area observed in a section of the outermost surface portion of 100 pores/$\mu$m$^2$ to 1,000 pores/$\mu$m$^2$, and an average value of sectional pore diameters [nm] of 1 nm to 99 nm.

6. The porous membrane according to item 5, in which a value Y obtained by dividing the number of the sectional pores per unit area [pores/$\mu$m$^2$] by the average value of the sectional pore diameters [nm] is 3 to 10 pores/$\mu$m$^2$/nm.

7. The porous membrane according to item 5 or 6, in which a standard deviation of the sectional pore diameters [nm] of the outermost surface portion is 1.0 nm to 50 nm.

8. The porous membrane according to any one of items 2 to 7, in which a standard deviation of the surface pore diameters [nm] of the surface portion is 0.5 nm to 5.0 nm.

9. The porous membrane according to any one of items 4 to 8, in which the permeability coefficient k [m$^2$] represented by Formula (2) above at the tortuosity R is 0.5 × 10$^{-17}$ m$^2$ to 5.0 × 10$^{-17}$ m$^2$.

10. Provided is a method for manufacturing a porous membrane, the method including: a step (A) of dissolving a polymer in a solvent to provide a polymer solution; and a step (B) of then coagulating the polymer solution in a non-solvent to form a porous membrane, in which in the step (A), a self-diffusion coefficient [m$^2$/sec] of the polymer dissolved in the polymer solution is 0.8 × 10$^{-11}$ m$^2$/sec to 1.6 × 10$^{-11}$ m$^2$/sec, the self-diffusion coefficient being calculated by all-atom molecular dynamics calculation, and in the step (B), the non-solvent contains 90 to 100 wt% of water, and a temperature of the non-solvent is 6°C to 45°C.

11. The method for manufacturing a porous membrane according to item 10, in which in the step (A), the solvent contains a hydrogen bonding solvent having a hydrogen bond donor property and a hydrogen bond acceptor property and having a molecular weight of 500 Da or less, and the dissolved polymer contains a polymer having a hydrogen bond donor property and/or a hydrogen bond acceptor property.

12. The method for manufacturing a porous membrane according to item 11, in which a value obtained by dividing a number of moles of a hydrogen bond acceptor functional group contained in the hydrogen bonding solvent in the step (A) by a number of moles of a hydrogen bond donor functional group contained in the polymer having the hydrogen bond donor property and/or the hydrogen bond acceptor property is 1.0 to 12.

13. The method for manufacturing a porous membrane according to item 11 or 12, in which a value obtained by dividing a number of moles of a hydrogen bond donor functional group contained in the hydrogen bonding solvent in the step (A) by a number of moles of a hydrogen bond acceptor functional group contained in the polymer having the hydrogen bond donor property and/or the hydrogen bond acceptor property is 0.5 to 5.0.

14. A liquid filtration method using the porous membrane according to any one of items 1 to 9.

EFFECTS OF THE INVENTION

The present invention can provide a porous membrane having excellent contamination resistance by removing coarse components on the outer surface of the porous membrane and allowing fine components to efficiently permeate the porous membrane. As a result, it is possible to highly precisely filter a contaminative liquid to be filtered, and it is possible to suppress clogging due to contamination and to maintain a filtration flux even in long-term use.

BRIEF DESCRIPTION OF THE DRAWINGS

Fig. 1 schematically shows a filtration situation using a porous membrane of the present invention.
Fig. 2 schematically shows a filtration situation using a conventional porous membrane.
Fig. 3 schematically shows a filtration situation using a conventional porous membrane.
Fig. 4 schematically shows a process of forming the porous membrane of the present invention.
Fig. 5 is an electron micrograph showing a section (part) of a porous membrane of one embodiment of the present invention.
Fig. 6 is an electron micrograph showing a section (part) of a porous membrane of a conventional technique.
Fig. 7 is a characteristic diagram showing the relationship between the number of surface pores and the dextran removal rate.
Fig. 8 is a characteristic diagram showing the relationship between the number of surface pores and the average value of surface pore diameters.
Fig. 9 is a characteristic diagram showing the relationship between the initial ratio of filtration fluxes and surface characteristics.
Fig. 10 is a characteristic diagram showing the relationship between the initial ratio of filtration fluxes and the self-diffusion coefficient.

EMBODIMENTS OF THE INVENTION

Hereinafter, embodiments of the present invention will be described in detail with reference to the drawings, but the present invention is not limited thereto at all. In the present specification, "mass" and "weight" are synonymous. The "liquid to be filtered" refers to the target liquid of filtration before permeating the porous membrane, and the "permeate" refers to a liquid after permeating the porous membrane. The liquid to be filtered that is difficult to filter refers to a liquid containing a large amount of contaminants that can clog the porous membrane in the liquid to be filtered. The contaminants are turbid matter, fungi, viruses, polysaccharides, proteins, organic compounds, and complexes thereof. The contaminants often include a coarse component (Stokes diameter: 13 nm or more) to be removed and a fine component (molecular weight: 10,000 Da or less) that preferably permeates because it is a useful substance or the like. The fine component should permeate the porous membrane, but because the component is fine, the fine component tends to be supplemented in the porous membrane, which causes clogging. The porous membrane of the present invention exhibits high contamination resistance even to a liquid to be filtered containing a large amount of both coarse components and fine components.

With respect to contamination resistance, contamination means that the porous membrane is clogged with coarse components (Stokes diameter: 13 nm or more), fine components (molecular weight: 10,000 Da or less), and the like contained in the liquid to be filtered in the filtration. When the porous membrane is clogged with coarse components or fine components, the filtration resistance increases, and the amount of liquid that can permeate the porous membrane decreases.

In general, in order to remove coarse components of turbid matter accumulated in the porous membrane from the pores, a fluid such as a permeate or compressed air is caused to flow from the permeate direction toward the liquid to be filtered, that is, backpressure washing is performed from the direction opposite to the filtration to remove the coarse components supplemented in the porous membrane. In the backpressure washing, it is easy to remove coarse components that are likely to accumulate outside the porous membrane, but it is difficult to remove fine components that are likely to accumulate in the inner portion of the porous membrane. Improvement of the "contamination resistance" in the present invention refers to making pores of the porous membrane less likely to be clogged regardless of whether the liquid to be filtered contains coarse components or fine components. The porous membrane having improved contamination resistance according to the present invention will be described below.

<Porous Membrane>

A porous membrane according to an embodiment of the present invention is required to include, in at least one surface, a surface portion spanning 10 $\mu$m in thickness from the surface, being denser than an inner portion, and having a removal rate T of dextran having a weight-average molecular weight of 40,000 Da of 60 to 95%, in which the number of surface pores of the surface portion is required to be 200 pores/$\mu$m$^2$ to 2,000 pores/$\mu$m$^2$. The surface pores are pores observed on the surface of the surface portion.

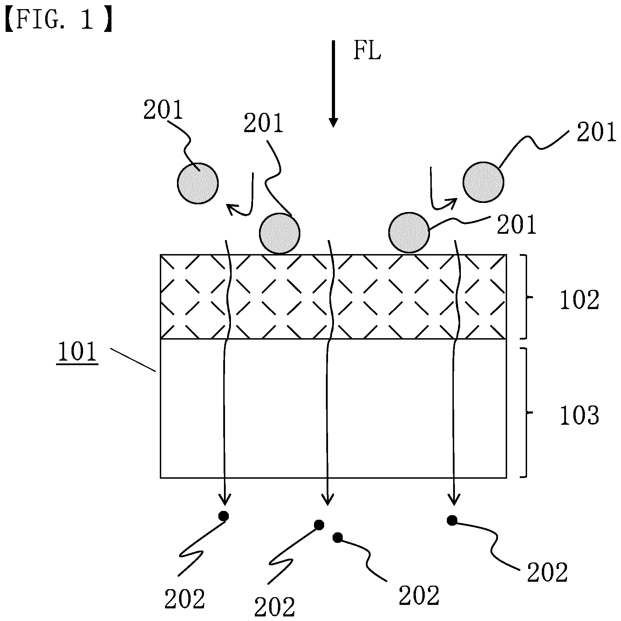

Fig. 1 schematically shows filtration of a liquid to be filtered that is difficult to filter with the porous membrane of the present invention. Fig. 1 is a schematic conceptual diagram showing a part of a section of the porous membrane. A porous membrane 101 includes a surface portion 102 and an inner portion 103. The surface portion 102 has a denser structure than in the inner portion 103. In Fig. 1, solid lines drawn in the surface portion 102 schematically show a network structure. A filtration direction FL is a direction from the surface portion 102 toward the inner portion 103. The filtration target of the liquid to be filtered contains a coarse contaminant component 201 and a fine contaminant component 202. Since micropores of the surface portion 102 are dense, the coarse contaminant component 201 cannot enter the porous membrane and does not block the surface portion 102 of the porous membrane, and the porous membrane is less likely to be contaminated. On the other hand, since a large number of pores are opened in the surface portion 102, the fine contaminant component 202 is dispersed and enters the inner portion 103 through the surface portion 102 of the porous membrane in the filtration direction, and the porous membrane is less likely to be contaminated.

That is, since the surface portion spanning 10 $\mu$m in thickness from the surface is denser than the inner portion, coarse contaminants and objects to be removed in the liquid to be filtered are prevented from entering the porous membrane, and high contamination resistance is exhibited. The fact that the surface portion is denser than the inner portion can be confirmed if the porosity of the surface portion spanning 10 $\mu$m in thickness from the surface is lower than the porosity of the inner portion at a thickness of 10 $\mu$m or more from the surface when a region with a thickness of 10 um in a section of the porous membrane is observed with a scanning electron microscope (hereinafter referred to as "SEM"). In the case of determining the porosity, an image obtained by observing the section of the porous membrane with the SEM is binarized using free software "ImageJ". When binarization is performed, Create Background is performed with 1 pixel in Subtract Background, and then the condition: Persentile is selected in Threshold (threshold for binarization). In the obtained binarized image, the area of the pore portion is determined by selecting Area in Analyze Particles and divided by the area of the observed porous membrane to calculate the porosity. The porosity of the surface portion is only required to be smaller than that of the inner portion but is preferably 55 to 90%, more preferably 63 to 80%.

The fact that the surface portion is denser than the inner portion is preferable because the coarse contaminant components and the objects to be removed held on the outer side of the surface portion can be efficiently discharged from the porous membrane particularly when a backpressure washing step of filtering in a reverse direction is performed in the middle of filtration. In addition, also in the case of performing crossflow filtration in which a liquid flows in a direction perpendicular to the filtration direction or performing a flushing step in the middle of filtration, that fact is preferable because the coarse contaminants and the objects to be removed held on the surface portion can be efficiently discharged from the porous membrane.

The inventors have found that it is necessary that the removal rate T of dextran with a weight-average molecular weight of 40,000 Da is 60% or more in order to make it difficult for a coarse component (Stokes diameter: 13 nm or more) to be removed to enter the porous membrane and to efficiently discharge a slight amount of the coarse component entering the porous membrane from the porous membrane by backpressure washing or the like. By specifying the removal rate of dextran having a specific molecular weight, it is possible to obtain a porous membrane having excellent contamination resistance, in which a contaminant is less likely to enter the surface portion, and the contaminant can be efficiently discharged from the porous membrane by backpressure washing or the like.

The dextran removal rate T is preferably 68% or more, more preferably 70% or more. In addition, it has been found that when the dextran removal rate T is 95% or less, a fine component (molecular weight: 10,000 Da or less) that is not an object to be removed but preferably permeates the porous membrane is not trapped in the porous membrane but sufficiently permeates and provides high contamination resistance. In addition, when the dextran removal rate T is 95% or less, the permeation resistance of the porous membrane tends to be small, and a large amount of filtrate is exhibited. The dextran removal rate T is more preferably 90% or less, particularly preferably 85% or less. Since the removal rate T of dextran with a weight-average molecular weight of 40,000 Da is 60 to 95%, it is possible to sufficiently prevent coarse contaminants and objects to be removed in the liquid to be filtered from entering the membrane, and excellent contamination resistance is exhibited. The dextran removal rate T is preferably 68 to 90%, more preferably 70 to 90%, most preferably 70 to 85%.

The dextran removal rate T can be calculated from following Formula (3) by performing filtration using the porous membrane at a crossflow linear velocity of 1.0 m/sec and a transmembrane pressure difference of 10 kPa using a dextran aqueous solution prepared to have a concentration of commercially available dextran having a weight-average molecular weight of 40,000 Da of 1,000 ppm and a temperature of 25°C.

$$T = \{(\text{refractive index of liquid to be filtered}) - (\text{refractive index of permeate})\} / (\text{refractive index of liquid to be filtered}) \times 100 \qquad \text{Formula (3)}$$

Here, the crossflow linear velocity is a value obtained by dividing the flow rate of the liquid to be filtered in the direction perpendicular to the filtration direction by the sectional area of the channel of the flow. The transmembrane pressure difference is a difference between the pressure on the liquid to be filtered side and the pressure on the permeate side across the porous membrane.

When the number of surface pores observed on the surface of the surface portion of the porous membrane is 200 pores/$\mu$m$^2$ to 2,000 pores/$\mu$m$^2$, contaminant components in the liquid to be filtered can be dispersed in the porous membrane, and excellent contamination resistance is exhibited. Furthermore, even if the contaminant components in the liquid to be filtered have partially clogged the surface pores as the filtration progresses, the number of surface pores is large, so that the number of channels through which the liquid to be filtered permeates the porous membrane can be sufficiently secured, and therefore excellent contamination resistance is easily exhibited. When the number of surface pores is 200 pores/$\mu$m$^2$ or more, it is possible to sufficiently secure channels until cleaning such as backpressure washing is performed even in the case of a contaminative liquid to be filtered. In addition, filtered water frequently reaches pores on the surface of the porous membrane and easily flows straight into the porous membrane. The number of surface pores of the porous membrane is more preferably 290 pores/$\mu$m$^2$ to 1,500 pores/$\mu$m$^2$, particularly preferably 350 pores/$\mu$m$^2$ to 1,000 pores/$\mu$m$^2$.

The number of surface pores of the porous membrane is the number of pores present in the surface when the surface of the porous membrane is observed. In the case of determining the number of surface pores of the porous membrane, an image obtained by observing the surface of the porous membrane with a SEM is binarized using free software "ImageJ". When binarization is performed, Create Background is performed with 1 pixel in Subtract Background, and then the condition: RenyiEntropy is selected in Threshold (threshold for binarization). In the obtained binarized image, the number of pores in the range observed is determined by Analyze Particles. In the case of determining the number of surface pores per unit area [pores/$\mu$m$^2$], 1,000 or more pores are observed, and the number of pores is divided by the total area of the observed region.

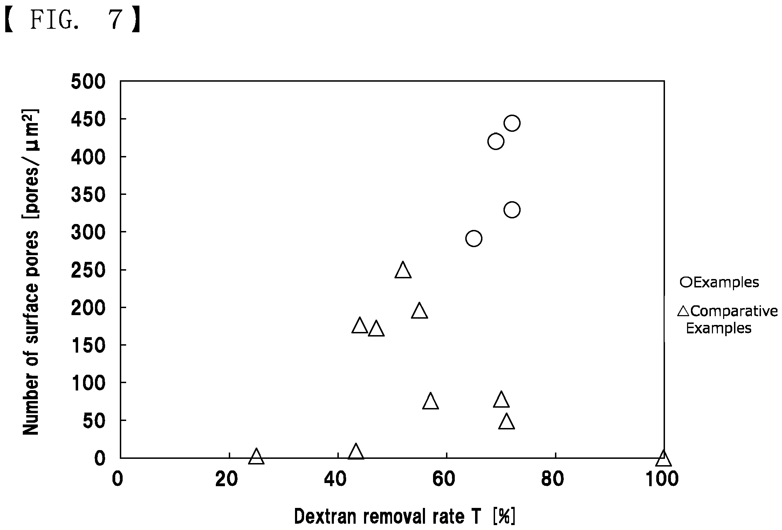

Fig. 7 is a characteristic diagram showing the relationship between the number of surface pores and the dextran removal rate. As for porous membranes of conventional techniques indicated by the symbol $\triangle$ indicating comparative examples in Fig. 7, when the number of surface pores is large, the dextran removal rate tends to be low, and conversely, when the dextran removal rate is high, the number of surface pores tends to be small, so that there is a trade-off relationship. As for porous membranes of the present invention indicated by the symbol o indicating examples in Fig. 7, it can be seen that the number of surface pores is specified as 200 pores/$\mu$m$^2$ or more, and the dextran removal rate is specified as 60% or more. The porous membrane of the present invention overcomes the trade-off of the conventional technique, has both a large number of surface pores and a high dextran removal rate, and thus can exhibit excellent contamination resistance.

When the average value of the surface pore diameter [nm] of the surface portion of the porous membrane is 5.0 nm to 12.0 nm, coarse contaminant components and fine objects to be removed in the liquid to be filtered are prevented from entering the porous membrane, and high contamination resistance is easily exhibited, which is preferable. When the average value of the surface pore diameter [nm] is 12.0 nm or less, coarse components (Stokes diameter: 13 nm or more) to be removed in the liquid to be filtered are prevented from entering the porous membrane, and high contamination resistance is easily exhibited, which is preferable. In addition, when the average value of the surface pore diameter [nm] is 5.0 nm or more, a fine component (molecular weight: 10,000 Da or less) that is not an object to be removed but preferably permeates the porous membrane is not trapped in the porous membrane but sufficiently permeates and provides high contamination resistance, which is preferable. The average value of the surface pore diameter [nm] of the surface portion is more preferably 5.0 to 9.0 nm, particularly preferably 5.0 to 8.0 nm.

The surface pore diameter is the diameter of a pore present in the surface when the surface of the porous membrane is observed. In the case of determining the surface pore diameter of the porous membrane, an image obtained by observing the surface of the porous membrane with a SEM is binarized using free software "ImageJ". When binarization is performed, Create Background is performed with 1 pixel in Subtract Background, and then the condition: RenyiEntropy is selected in Threshold (threshold for binarization). In the obtained binarized image, the area of each pore is determined by selecting Area in Analyze Particles, and the diameter calculated assuming each pore as a circle is defined as the surface pore diameter. When the average value of the surface pore diameters is to be determined, the pore diameters of 1,000 or more pores are averaged.

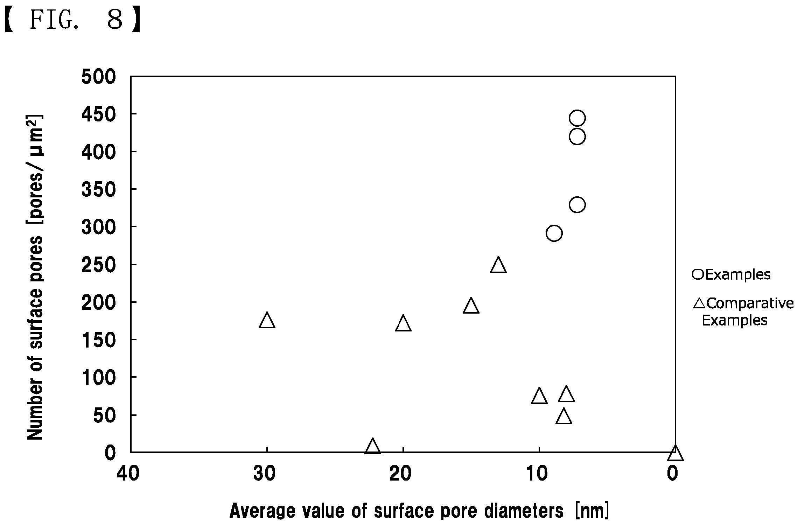

A value X obtained by dividing the number of surface pores (which may be abbreviated as the surface pore number) in the surface portion of the porous membrane by the average value of the surface pore diameters is preferably 30 to 100 pores/$\mu$m$^2$/nm because coarse contaminant components and objects to be removed in the liquid to be filtered can be prevented from entering the porous membrane, and the number of channels through which the liquid to be filtered permeates the porous membrane can be sufficiently secured, so that excellent contamination resistance is easily exhibited. A large value X means that there are many small pores. Usually, when the pore diameter is small, the proportion of the polymer constituting the porous membrane tends to increase so as to fill the pores of the porous membrane, and therefore the number of pores tends to decrease. As a result, as indicated by the symbol Δ indicating comparative examples in Fig. 8, the surface pore number decreases as the surface pore diameter decreases, and there is a trade-off relationship between the surface pore diameter and the surface pore number.

As a result of intensive studies, the inventors have found that excellent contamination resistance is easily exhibited because the small pores prevent coarse contaminant components and objects to be removed in the liquid to be filtered from entering the porous membrane and because the large number of pores sufficiently secures the number of channels through which the liquid to be filtered permeates the porous membrane and allows for dispersion of contaminant components. That is, from the viewpoint of contamination resistance, it is preferable to achieve both a good (small) surface pore diameter and a good (large) surface pore number. Since the surface pore number and the surface pore diameter satisfy a positive correlation in which both become better, and both of them contribute to contamination resistance, it is preferable to use the value X in consideration of both as indices of contamination resistance. In addition, since the surface pore number is negatively correlated to the surface pore diameter, it is preferable to use the value X divided by the surface pore diameter as the index rather than using only the surface pore number as the index.

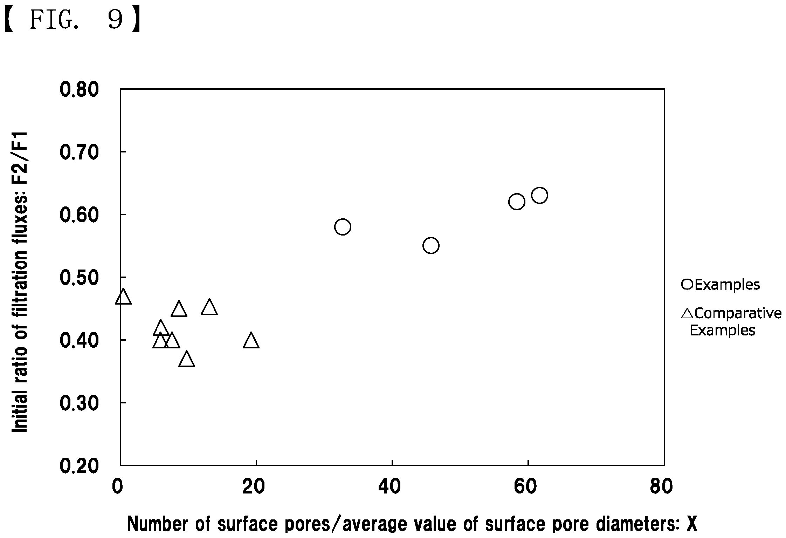

Such a porous membrane having a large number of surface pores and a small surface pore diameter has not been obtained in conventional techniques. Fig. 9 shows the value X obtained by dividing the number of surface pores by the average value of surface pore diameters and the initial ratio of filtration fluxes. As the initial ratio F2/F1 of filtration fluxes is closer to 1, filtration for a longer time is performed better. However, as shown in examples and comparative examples, it is shown that the porous membrane of the present invention can maintain good filtration of F2/F1 of 0.50 or more for a long time when X = 30 to 100 pores/$\mu$m$^2$/nm is satisfied.

As will be described later, in the porous membrane of the present invention, the progress of excessive phase separation and coarsening is suppressed by making the self-diffusion coefficient of the polymer relatively small, that is, by making the polymer hardly move, in the process of forming the porous membrane, and the porous membrane is coagulated in a state in which fine pores exist in a large amount, so that it is easy to break the trade-off between the pore diameter and the number of pores. The value X is preferably 30 to 100 pores/$\mu$m$^2$/nm, which is higher than in the normal trade-off relationship, because excellent contamination resistance is exhibited, and the value X is more preferably 32 to 80 pores/$\mu$m$^2$/nm, particularly preferably 50 to 70 pores/$\mu$m$^2$/nm.

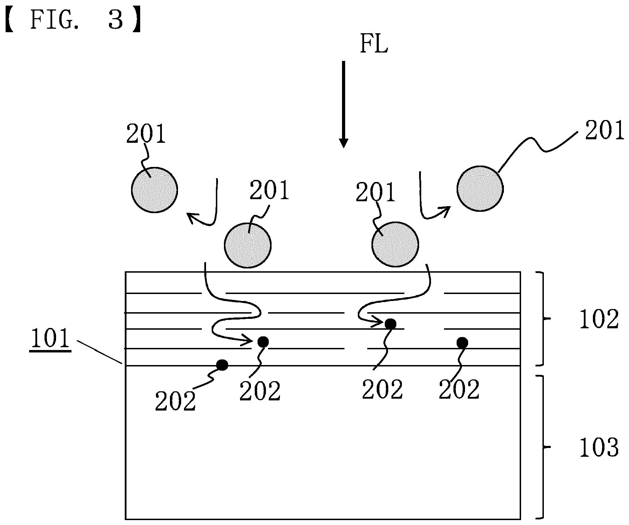

When the tortuosity R is 1.0 to 8.0, fine contaminant components in the liquid to be filtered can permeate the porous membrane without clogging, and the porous membrane easily exhibits excellent contamination resistance, which is preferable. The tortuosity is also called degree of bending, and the tortuosity means a degree to which the channel through which the liquid to be filtered passes is bent. That is, as the tortuosity is lower, the channel is closer to a straight line, and the contaminant component passes through a short channel, so that clogging is less likely to occur in the porous membrane. On the other hand, as schematically shown in Fig. 3, as the tortuosity is higher, the channel is bent, and the contaminant component passes through a longer channel, so that the porous membrane is easily clogged. Fig. 3 schematically shows a filtration situation using a porous membrane of a conventional technique.

The tortuosity R is generally calculated on the basis of the Kozeny-Carman equation and is described in, for example, the Journal of the Japanese Association for Petroleum Technology (Vol. 75, No. 2 (March, 2010) pp. 164 to 176). The tortuosity R is preferably 1.0 to 6.0, more preferably 1.0 to 5.5. Here, the tortuosity R of 1.0 means a cylindrical pore on a straight line.

In the present invention, the tortuosity R is obtained using following Formula (1).

$$R = (\varepsilon/2k)^{1/2} \cdot V/S \quad \cdots\cdots \text{ Formula (1)},$$

where

$\varepsilon$: porosity, k: permeability coefficient [m$^2$],
V: pore specific volume [m$^3$/g], S: specific surface area [m$^2$/g], and
the permeability coefficient k is a coefficient calculated from Formula (2) using a pure water permeation amount Q [cm$^3$/sec] per membrane area A [m$^2$] at a pressure P [Pa] at 25°C.

$$k = 8.76 \times Q/A/P \times 10^{-15} \quad \cdots\cdots \text{ Formula (2)}.$$

As described above, the porosity $\varepsilon$ can be determined by observing a region of the surface portion spanning

10 $\mu$m in thickness from the surface in a section of the porous membrane with a SEM and analyzing a binarized image. The specific surface area S and the pore specific volume V can be generally measured by the BET method using a commercially available nitrogen adsorption measuring apparatus. In addition, the permeability coefficient k [m$^2$] in Formula (1) of the tortuosity R is preferably $0.5 \times 10^{-17}$ m$^2$ to $5.0 \times 10^{-17}$ m$^2$ from the viewpoint of stably obtaining good characteristics of the porous membrane.

As the porous membrane sample to be subjected to the nitrogen adsorption measurement, the surface portion of the porous membrane is collected with a commercially available freezing microtome and used. With the microtome, after moving the porous membrane at a constant moving distance, a blade can be brought into contact with the porous membrane to cut the porous membrane. The blade is installed in a direction parallel to the surface of the porous membrane. First, the porous membrane is brought close to the blade in increments of the moving distance of 0.5 $\mu$m, and the porous membrane is cut once. Thereafter, the movement distance is set to 10 $\mu$m, and cutting is further performed once, so that a surface portion up to 10 to 10.5 $\mu$m in thickness from the surface can be collected.

The permeability coefficient k is determined on the basis of Formula (2) by filtering the whole amount of pure water through a porous membrane. The permeability coefficient k is preferably $0.5 \times 10^{-17}$ to $5.0 \times 10^{-17}$, more preferably $1.2 \times 10^{-17}$ to $5.0 \times 10^{-17}$, most preferably $1.5 \times 10^{-17}$ to $5.0 \times 10^{-17}$. Here, the membrane area A is the area of the surface of the porous membrane in contact with the liquid to be filtered. In addition, the pressure P is the above-described transmembrane pressure difference. As described above, since the porous membrane is densest in the surface portion at a thickness of 10 $\mu$m from the surface, calculation from Formula (2) is based on a thickness of the surface portion of 10 $\mu$m.

In the surface portion of the porous membrane, the outermost surface portion spanning 2 $\mu$m in thickness from the surface has a nano-network structure in which the average value of sectional pore diameters [nm] in a section of the outermost surface portion is 1 nm to 99 nm and the number of sectional pores is 100 pores/$\mu$m$^2$ to 1,000 pores/$\mu$m$^2$, which is preferable because the porous membrane easily exhibits excellent contamination resistance. The sectional pores are pores observed on the section of the outermost surface portion. Since the average value of the sectional pore diameters [nm] in the section of the outermost surface portion is as fine as 1 nm to 99 nm, it is easy to prevent coarse contaminant components and objects to be removed in the liquid to be filtered from entering the porous membrane by trapping these components with the outermost surface portion of the porous membrane. Furthermore, since the number of sectional pores is as large as 100 pores/$\mu$m$^2$ to 1,000 pores/$\mu$m$^2$, the pores are formed in all directions vertically and horizontally, and the channels are easily linearly connected, that is, the tortuosity is low, so that fine contaminant components are less likely to cause clogging when permeating the porous membrane. In addition, even when some pores are clogged, channels through which the liquid to be filtered permeates the porous membrane can be secured, so that the porous membrane is preferable because the porous membrane easily exhibits excellent contamination resistance.

That is, referring back to Fig. 1, the surface portion 102 of the porous membrane has a dense structure and has many pores, and the pores spreading three-dimensionally are connected vertically and horizontally. The pore diameter is smaller than 0.1 $\mu$m, and the number of pores corresponds to an ultrahigh density nano-network structure. The fine contaminant component 202 passes through any of a plurality of connected pores without being supplemented by the resin portion having the network structure. When fine components are allowed to pass through the porous membrane, the size of the pores of the porous membrane is adjusted in accordance with the size of the fine components. However, by forming many pores densely, the fine contaminant component 202 is less likely to be supplemented in the network. Therefore, a larger number of pores is more preferable. This is preferable from the viewpoint of improving contamination resistance and the viewpoint of good permeability. Furthermore, since the porous membrane has a large number of pores, that is, the porous membrane is dense, the shortest distance formed by several pores is shorter as the tortuosity is lower, and even if some of the pores are clogged, a channel formed by other pores can be secured in the vicinity. Therefore, the porous membrane is preferable because it is easy to maintain permeability from the viewpoint that the change in the tortuosity corresponding to the shortest distance is small.

The nano-network structure of the present invention is characterized by having a fine pore diameter and a large number of pores as compared with a general network structure. A general network structure has a coarse pore diameter and a small number of pores. For example, in the network structure shown in the drawings of Patent Document 1, the pore diameter is 1 to 2 $\mu$m and the number of pores is 0.1 pores/$\mu$m$^2$ or less, and small one of the pore diameters of the network structure of the example of Patent Document 2 is 300 nm and the number of pores is about a dozen pores/$\mu$m$^2$. On the other hand, in the nano-network structure, the resin portion of the polymer forms a network, each pore of the network is very small as described above, and a large number of pores are densely present.

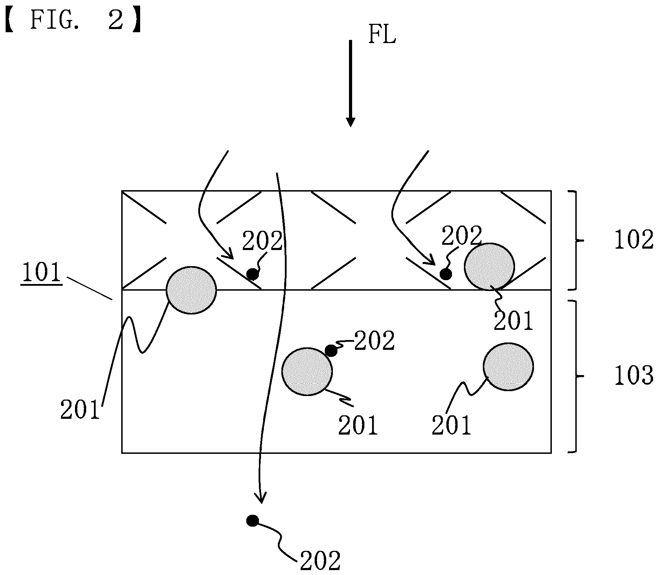

As described above, in a general network structure known so far, since the pore diameter is coarse, the coarse contaminant component 201 easily enters the inner portion of the porous membrane and causes clogging, and since the number of pores is small, the channels are hardly linearly connected, the tortuosity is increased, the length of the channel through which fine contaminant component passes is long, and the fine contaminant component 202 is easily trapped in the porous membrane and easily causes clogging. Fig. 2 schematically shows filtration of a liquid to be filtered that is difficult to filter with such a porous membrane.

In Fig. 2, the coarse contaminant component 201 is less likely to be blocked by a surface layer 102, enters the porous membrane, remains in the porous membrane, and is likely to cause clogging. In addition, the fine contaminant component 202 is likely to be caught in a network structure having a large pore diameter and a high tortuosity, is less likely to permeate the porous membrane, and remains in the porous membrane. Compare with Fig. 1. The coarse contaminant component 201 and the fine contaminant component 202 contaminate the porous membrane, making it difficult to maintain the filtration capacity for a long time.

The average value of the sectional pore diameters is more preferably 1.0 nm to 38 nm, particularly preferably 1.0 to 36 nm. The number of sectional pores is more preferably 120 to 800 pores/$\mu$m$^2$, particularly preferably 140 to 600 pores/$\mu$m$^2$.

The sectional pore diameter of the porous membrane is determined as follows. The sectional sample for observation is obtained by collecting at a low temperature a slice with a thickness of 100 nm of the porous membrane embedded using a commercially available embedding agent for producing a frozen tissue section and using a freezing microtome, and performing vacuum drying at room temperature for 12 hours. The section of the outermost surface portion of the porous membrane is observed with a transmission electron microscope (hereinafter referred to as "TEM") to obtain an image, and the image is binarized using free software "ImageJ". When binarization is performed, the condition Minimum is selected in Threshold (threshold for binarization). In the obtained binarized image, the area of each pore is determined by selecting Area in Analyze Particles, and the diameter calculated assuming each pore as a circle is defined as the sectional pore diameter. When the average value of the sectional pore diameters is to be determined, the pore diameters of 1,000 or more pores are averaged. In addition, the number of sectional pores is divided by the total area of the analyzed image to obtain the number of pores per unit area. Similarly to the pore diameter, an image including 1,000 or more pores is analyzed to calculate the number.

A value Y obtained by dividing the number of sectional pores in the outermost surface portion of the porous membrane by the average value of the sectional pore diameters is preferably 3 to 10 pores/$\mu$m$^2$/nm because coarse contaminant components and objects to be removed in the liquid to be filtered can be prevented from entering the porous membrane, and the number of channels through which the liquid to be filtered permeates the porous membrane can be sufficiently secured, so that excellent contamination resistance is easily exhibited. A large value Y means that there are many small pores. As described above regarding the surface pores, when the sectional pore diameter is small, the number of sectional pores tends to be small, and the pore diameter and the number of pores have a trade-off relationship. As a result of intensive studies, the inventors have found that, also in the section of the outermost surface portion, excellent contamination resistance is easily exhibited because the small sectional pores prevent coarse contaminant components and objects to be removed in the liquid to be filtered from entering the porous membrane and because the large number of sectional pores sufficiently secures the number of channels through which the liquid to be filtered permeates the porous membrane and allows for dispersion of contaminant components. Since the sectional pore number and the sectional pore diameter have a positive correlation, and both of them contribute to contamination resistance, it is preferable to use the value Y in consideration of both as indices of contamination resistance. In addition, since the sectional pore number is negatively correlated to the sectional pore diameter, it is preferable to use the value Y divided by the sectional pore diameter as the index rather than using only the sectional pore number as the index. In the porous membrane of the present invention, the value Y is preferably 3 to 10 pores/$\mu$m$^2$/nm, which is higher than in the normal trade-off relationship, because excellent contamination resistance is exhibited, and the value Y is more preferably 4 to 10 pores/$\mu$m$^2$/nm, particularly preferably 5 to 10 pores/$\mu$m$^2$/nm.

When the standard deviation of the sectional pore diameter [nm] is 1.0 nm to 50 nm in the outermost surface portion of the porous membrane, the load of the contaminants on the porous membrane can be made uniform, and excellent contamination resistance is easily exhibited, which is preferable. The standard deviation of the sectional pore diameter is more preferably 1.0 nm to 35 nm. The standard deviation of the sectional pore diameter can be calculated by obtaining data of each sectional pore diameter by binarizing and analyzing as described above the TEM image obtained by observing the section of the porous membrane.

When the standard deviation of the surface pore diameter [nm] of the surface portion of the porous membrane is 0.5 to 5.0 nm, the load of the contaminants on the porous membrane can be made uniform, and excellent contamination resistance is easily exhibited, which is preferable. The smaller the standard deviation of the surface pore diameter, the smaller the variation in the pore diameter, and the standard deviation is more preferably 0.5 to 4.0 nm, still more preferably 0.5 to 3.0 nm. The standard deviation of the surface pore diameter can be calculated by obtaining data of each surface pore diameter by binarizing and analyzing as described above the SEM image obtained by observing the surface of the porous membrane.

<Method for Manufacturing Porous Membrane>

The porous membrane of the present invention can be obtained by a manufacturing method including: a step (A) of dissolving a polymer in a solvent to provide a polymer solution; and a step (B) of then coagulating the polymer solution in a non-solvent to form a porous membrane, in which the self-diffusion coefficient [$m^2$/sec] of the polymer dissolved in the polymer solution obtained in the step (A) is $0.8 \times 10^{-11}$ $m^2$/sec to $1.6 \times 10^{-11}$ $m^2$/sec, the self-diffusion coefficient being calculated by all-atom molecular dynamics calculation, the non-solvent used in the step (B) contains 90 to 100 wt% of water, and the temperature of the non-solvent is 6°C to 45°C.

The type of the polymer used in the step (A) is not particularly limited, and specific examples thereof include a polysulfone-based resin, a polyethersulfone-based resin, a polyvinylidene fluoride-based resin, nylon, a cellulose ester such as cellulose acetate and cellulose acetate propionate, a fatty acid vinyl ester, polyvinyl alcohol, polyvinyl acetate, polyvinyl pyrrolidone, ethylene oxide, propylene oxide, a polymer of an acrylic acid ester or a methacrylic acid ester such as polymethyl methacrylate, and a copolymer thereof.

In particular, in order to use the porous membrane for filtration for a long period of time, it is preferable to periodically perform chemical washing of accumulated contaminant components, and it is particularly preferable to contain a polyvinylidene fluoride-based resin having excellent chemical resistance. The polyvinylidene fluoride-based resin refers to a homopolymer of vinylidene fluoride or a copolymer of vinylidene fluoride. Here, the copolymer of vinylidene fluoride refers to a polymer having a vinylidene fluoride residue structure. The polymer having a vinylidene fluoride residue structure is typically a copolymer of a vinylidene fluoride monomer and another fluorine-based monomer or the like. Examples of such a fluorine-based monomer include vinyl fluoride, tetrafluoroethylene, hexafluoropropylene, and chlorotrifluoroethylene. The above vinylidene fluoride copolymer may be copolymerized with ethylene or the like other than the fluorine-based monomer to such an extent that the effect of the present invention is not impaired.

The polyvinylidene fluoride-based resin is more preferably contained in an amount of 50 wt% or more, particularly preferably contained in an amount of 60 wt% or more when the weight of the porous membrane is 100%. The weight-average molecular weight of the polymer is preferably 50,000 to 1,000,000 Da because the later-described self-diffusion coefficient is easily controlled within a relatively slow and suitable range. In addition, a plurality of polymers may be mixed and used. The solvent preferably contains a good solvent. Here, the "good solvent" refers to a solvent capable of dissolving 5 wt% or more of a polymer even in a low temperature range of 60°C or less. Examples of the good solvent include N-methyl-2-pyrrolidone (hereinafter referred to as "NMP"), 2-pyrrolidone (hereinafter referred to as "2P"), ε-caprolactam (hereinafter referred to as "ε-CL"), dimethylacetamide, dimethylformamide, methyl ethyl ketone, acetone, tetrahydrofuran, tetramethylurea, trimethyl phosphate, and mixed solvents thereof. The good solvent is more preferably contained in the solvent in an amount of 40 wt% or more, particularly preferably contained in an amount of 60 wt% or more. When a large amount of the good solvent is contained, a polymer chain is expanded in the polymer solution, and the self-diffusion coefficient described later is easily controlled within a relatively slow and suitable range, which is preferable

Here, the "non-solvent" in the step (B) refers to a solvent that does not dissolve or swell a polymer even when the non-solvent is heated to a high temperature up to a boiling point. Examples of the non-solvent include water, hexane, pentane, benzene, toluene, methanol, ethanol, carbon tetrachloride, o-dichlorobenzene, trichloroethylene, ethylene glycol, diethylene glycol, triethylene glycol, propylene glycol, butylene glycol, pentanediol, hexanediol, an aliphatic hydrocarbon such as polyethylene glycol having a low molecular weight, an aromatic hydrocarbon, an aliphatic polyhydric alcohol, an aromatic polyhydric alcohol, a chlorinated hydrocarbon, other chlorinated organic liquids, and mixed solvents thereof.

The concentration (wt%) of the polymer in the polymer solution is preferably equal to or higher than the entanglement concentration in order to control the self-diffusion coefficient within a suitable range, and more specifically, it is preferably 10 to 40 wt%, further preferably 12 to 30 wt%, particularly preferably 15 to 25 wt%. It has been found that when the concentration of the polymer is 10 wt% or more, the self-diffusion coefficient can be made relatively slow, and the coagulation can be performed in a state in which a large amount of fine pores are present in the porous membrane. The polymer concentration is more preferably 12 wt% or more, particularly preferably 15 wt% or more. When the concentration of the polymer is 40 wt% or less, the proportion of the polymer in the porous membrane can be reduced, and a sufficient number of pores can be secured. The polymer concentration is more preferably 30 wt% or less, particularly preferably 25 wt% or less.

The porous membrane forming step (B) of coagulating the polymer solution in a non-solvent to form a porous membrane is a step of forming a porous membrane by what is called non-solvent-induced phase separation. When the polymer solution comes into contact with the non-solvent, the polymer cannot be completely dissolved in the solvent, phase separation occurs into a polymer-rich phase and a solvent-rich phase, and each phase coarsens while coalescing with the same phase in the surroundings.

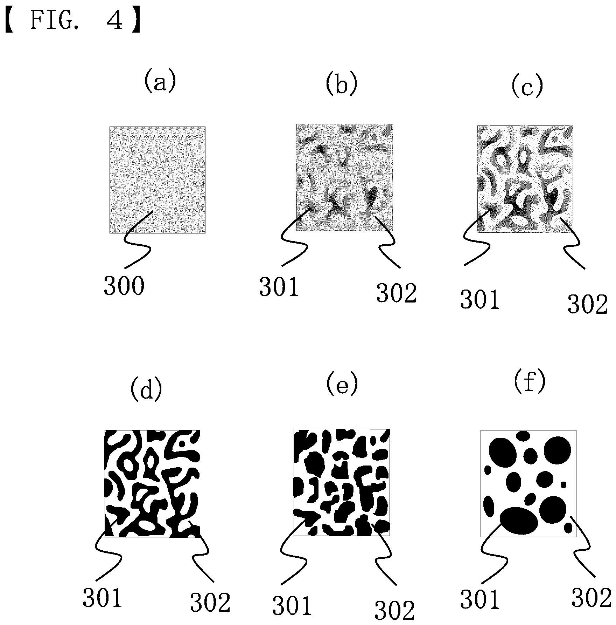

Fig. 4 schematically shows a process of forming the porous membrane in the step (B). In the order of Figs. 4(a) to 4(f), phase separation proceeds in the polymer solution, and a portion (polymer-rich phase 301) having a high polymer concentration coarsens. In this phase separation and/or coarsening process, exchange between the solvent and the non-solvent proceeds, and when the concentration of the non-solvent exceeds a certain level, the polymer is solidified, and the structure of the porous membrane is immobilized. At this time, a solvent-rich phase 302 becomes pores of the porous membrane.

As a result of intensive studies, the inventors have found that in the manufacture of the porous membrane of the present invention, by setting the self-diffusion coefficient of the polymer to a relatively low range of $0.8 \times 10^{-11}$ m²/sec to $1.6 \times 10^{-11}$ m²/sec, the progress of excessive phase separation and coarsening is suppressed, and coagulation can be performed in a state where the polymer-rich phase 301 and the solvent-rich phase 302 are respectively present finely and in a large amount. When the self-diffusion coefficient is $0.8 \times 10^{-11}$ m²/sec or more, the polymer has a diffusion coefficient sufficient for phase separation from the solvent, and pores are easily formed. When diffusion of the polymer is so slow that phase separation is difficult, pores are hardly formed. When the self-diffusion coefficient is $1.6 \times 10^{-11}$ m²/sec or less, it is easy to form many micropores by suppressing the progress of excessive phase separation and coarsening and suppressing the coalescence of the pores. That is, by appropriately controlling the self-diffusion coefficient of the polymer in a relatively low range, a porous membrane having many micropores can be formed. The self-diffusion coefficient is more preferably $0.8 \times 10^{-11}$ m²/sec to $1.4 \times 10^{-11}$ m²/sec, still more preferably $0.8 \times 10^{-11}$ m²/sec to $1.1 \times 10^{-11}$ m²/sec.

The self-diffusion coefficient is determined by, for example, a method of determining the self-diffusion coefficient by all-atom molecular dynamics calculation. The all-atom molecular dynamics calculation is a method of obtaining a trajectory of each atom by solving the equation of motion of a molecular population system for every constituent atom. First, a polymer solution system is produced so as to have a polymer concentration (wt%) to be actually used. At this time, one model polymer chain is modeled so as to have a molecular weight of 800 to 6,000 that is 1/200 to 1/5 of the weight-average molecular weight of a polymer actually used. As the potential parameter used in the molecular dynamics calculation, known parameters such as those disclosed in DREIDING [S. L. Mayo, B. D. Olafson, W. A. Goddard III, J. Phys. Chem. 94, 8897 (1990).], GAFF [J. Wang, R. M. Wolf, J. W. Caldwell, P. A. Kollman, D. A. Case, J. Comput. Chem. 25, 1157 (2004)], OPLS-AA [W. L. Jorgensen, D. S. Maxwell, Julian Tirado-Rives, J. Am. Chem. Soc. 118, 11225 (1996)], and CHARMM [B. R. Brooks, R. E. Bruccoleri, B. D. Olafson, D. J. States, S. Swaminathan, M. Karplus, J. Comput. Chem. 4, 187 (1983)] can be used, but a parameter that reproduces the density or cohesive energy, which is a physical quantity representing an aggregation state of a solution system, is preferable.

As a result of examining the reproducibility of the aggregation state by the inventors, it has been found that it is particularly preferable to use GAFF or OPLS-AA. Further, an isothermal-isobaric ensemble is configured by controlling the temperature to 25°C by the Nose-Hoover method [Hoover, W. G. Phys. Rev. A, 31, 1695 (1985).] and the pressure to 1 bar by the Andersen method [H. C. Andersen, J. Chem. Phys. 72, 2384 (1980)]. At this time, the short-ranged Lennard-Johns interaction is handled by applying a switch function from 1.0 nm to the cutoff 1.2 nm, and the long-range electrostatic interaction is calculated by the Particle Mesh Ewald method. Molecular dynamics calculation is performed with the isothermal-isobaric ensemble until the density becomes constant, then the unit cell length is adjusted so as to have an average density, and additional calculation of 11 ns is performed with an isothermal ensemble. Using the trajectory for 10 ns, the mean square displacement (MSD) of each atom of the polymer is obtained, and the self-diffusion coefficient of the polymer is calculated from following Formula (4). At this time, it is confirmed that the value obtained by dividing log (MSD) by log (t) is in the range of 0.9 to 1.1 for the ranges of MSD and t used for the calculation of D. When a plurality of types of polymers are mixed to form a polymer solution, a value obtained by determining the weighted average of the self-diffusion coefficients of respective polymers based on the percentages by weight of the polymers is defined as the self-diffusion coefficient of the polymers in the polymer solution.

$$D = MSD/6t \cdots \cdots \text{Formula (4)}$$

D: self-diffusion coefficient, t: time.

When the non-solvent used for coagulation contains 90 to 100 wt% of water in the manufacture of the porous membrane of the present invention, coagulation is fast, and the self-diffusion coefficient in the polymer solution tends to affect the rate of phase separation and coarsening. That is, it is easy to obtain the effect of controlling the self-diffusion coefficient in the polymer solution to a relatively low range. In addition, when the temperature of the non-solvent is 6°C to 45°C, coagulation is fast, and the self-diffusion coefficient in the polymer solution tends to affect the rate of phase separation and coarsening. The temperature of the non-solvent is more preferably 10°C to 35°C, still more preferably 15°C to 30°C.

With regard to the manufacture of the porous membrane of the present invention, in the step (A) described above, the solvent preferably contains a hydrogen bonding solvent having a hydrogen bond donor property and a hydrogen bond acceptor property and having a molecular weight of 500 Da or less, and the self-diffusion coefficient of the polymer is easily controlled within an appropriate range. Having a hydrogen bond donor property means having a positively polarized hydrogen atom, and specifically, having a hydroxy group (OH group), a carboxy group (COOH group), an amino group (NH group), or the like. Having a hydrogen bond acceptor property means having a lone electron pair, specifically, having a carbonyl group, an alkoxy group, a cyano group, or the like. When the solvent has a hydrogen bond donor property and a hydrogen bond acceptor property, interaction due to hydrogen bonding between the solvent and the solvent is strong, movement of the solvated polymer is suppressed, and the self-diffusion coefficient of the polymer is easily controlled to a relatively slow and suitable range. The solvent having a hydrogen bond donor property and a hydrogen bond acceptor property is not particularly limited, and specific examples thereof include 2P, $\varepsilon$-CL, 1,3-dimethylurea, N-methylacetamide, hydantoin, 2-imidazolidinone, and DL-pyroglutamic acid.

In the step (A) described above, the polymer to be dissolved contains a polymer having a hydrogen bond donor property and/or a hydrogen bond acceptor property, so that the self-diffusion coefficient of the polymer is easily controlled within an appropriate range, which is preferable. This is because when the polymer has a hydrogen bond donor property and/or a hydrogen bond acceptor property, the polymer interacts with a solvent having a hydrogen bond donor property and a hydrogen bond acceptor property by hydrogen bonding, and the self-diffusion coefficient of the polymer is easily controlled to a relatively slow and suitable range. The polymer having a hydrogen bond donor property and/or a hydrogen bond acceptor property is more preferably contained in an amount of 10 wt% to 50 wt% in the porous membrane from the viewpoint of controlling the self-diffusion coefficient of the polymer within an appropriate range.

Furthermore, if the value obtained by dividing the number of moles of the hydrogen bond acceptor functional group contained in the solvent in the step (A) by the number of moles of the hydrogen bond donor functional group contained in the polymer having a hydrogen bond donor property and/or a hydrogen bond acceptor property is 1.0 to 12, the hydrogen bond between the polymer and the solvent falls within an appropriate range, and the self-diffusion coefficient of the polymer is easily controlled to fall within a relatively slow and appropriate range. The value is more preferably 2.0 to 9.0, particularly preferably 5.4 to 8.0.

If the value obtained by dividing the number of moles of the hydrogen bond donor functional group contained in the solvent in the step (A) by the number of moles of the hydrogen bond acceptor functional group contained in the polymer having a hydrogen bond donor property and/or a hydrogen bond acceptor property is 0.5 to 5.0, the hydrogen bond between the polymer and the solvent falls within an appropriate range, and the self-diffusion coefficient of the polymer is easily controlled to fall within a relatively slow and appropriate range. The value is more preferably 1.5 to 2.3, particularly preferably 1.8 to 2.3.

The porous membrane of the present invention may further include another layer. In that case, it is preferable that the porous membrane of the present invention be provided in a surface portion. If the porous membrane of the present invention is provided in the surface portion, components contained in the liquid to be filtered are less likely to enter the inner portion of the porous membrane, and high permeation performance can be maintained for a long period of time. The above other layer is not particularly limited as long as it is a component capable of overlapping the porous membrane and forming a layer, but the other layer is preferably a support. Here, the "support" refers to a structure that physically reinforces the porous membrane and has a higher breaking strength than the porous membrane. In order to increase the breaking strength of the support, the breaking strength (breaking strength per unit area) of the support is preferably 3 MPa or more, more preferably 10 MPa or more. When the composite membrane in which the other layer and the porous membrane of the present invention are arranged in layers has a hollow fiber shape, the breaking strength of the support is preferably 300 gf or more, more preferably 800 gf or more.

EXAMPLES

Hereinafter, the present invention will be described specifically with reference to examples, but the present invention is not limited to these examples at all. The measurement methods and evaluation methods are first described below.

(i) Measurement of Porosity

The surface portion of the porous membrane was collected with a commercially available freezing microtome and used for observation. With the microtome, after moving the porous membrane at a constant moving distance, a blade can be brought into contact with the porous membrane to cut the porous membrane. The porous membrane immersed in distilled water was frozen at -20°C with a freezing microtome (manufactured by Leica; Jung CM3000), and the blade was placed in a direction perpendicular to the surface of the porous membrane. First, the porous membrane was brought close to the blade in increments of the moving distance of 30 um, and the porous membrane was cut once to provide a slice. The slice was vacuum-dried at 25°C for 12 hours. The section of the porous membrane was observed with a SEM (manufactured by Hitachi, Ltd.; SU-1510) such that a region of every 10 $\mu$m in the thickness direction of the porous membrane was continuously observed, and the porosity of each region was determined. When determining the porosity, an image obtained by observing the section of the porous membrane with the SEM was binarized using free software "ImageJ". When binarization was performed, Create Background was performed with 1 pixel in Subtract Background, and then the condition: Persentile was selected in Threshold (threshold for binarization). In the obtained binarized image, the area of the pore portion was determined by selecting Area in Analyze Particles and divided by the total area of the observed region of the porous membrane to calculate the porosity as a percentage.

(ii) Permeability Coefficient

The permeability coefficient k [$m^2$] was determined on the basis of Formula (2) by filtering the whole amount of pure water at 25°C through a porous membrane. Here, the membrane area A [$m^2$] was the area of the surface of the porous membrane in contact with the liquid to be filtered. In addition, the pressure P [Pa] was the above-described transmembrane pressure difference. Here, the permeability coefficient is a value calculated with a thickness of 10 $\mu$m in consideration of the thickness [m] of the densest surface portion of the porous membrane.

$$k = 8.76 \times Q/A/P \times 10^{-15} \cdots \cdots \text{Formula (2)}.$$

(iii) Measurement of Pore Specific Volume and Specific Surface Area

The surface portion to be used of the porous membrane was collected with a commercially available freezing microtome (manufactured by Leica; Jung CM3000). The porous membrane immersed in distilled water was frozen at -20°C with a freezing microtome (manufactured by Leica; Jung CM3000), and the blade was placed in a direction parallel to the surface of the porous membrane. First, the porous membrane was brought close to the blade in increments of the moving distance of 0.5 $\mu$m, and the porous membrane was cut once. Thereafter, the movement distance was set to 10 $\mu$m, and cutting was further performed once, so that a surface portion up to 10 to 10.5 $\mu$m in thickness from the surface was collected. A commercially available nitrogen adsorption measuring apparatus (manufactured by MicrotracBEL Corp.; BELSORP-miniII) was used to measure the pore specific volume V [$m^3$/g] and the specific surface area S [$m^2$/g] of the obtained slice of the surface portion by the BET method.

(iv) Tortuosity

Using the value of the region at a thickness of 10 $\mu$m from the surface of the porous membrane among the porosities determined in section (i), the permeability coefficient, the pore specific volume, and the specific surface area determined in sections (ii) and (iii) were substituted into Formula (1) to calculate the tortuosity R.

$$R = (\varepsilon/2k)^{1/2} \cdot V/S \cdots \cdots \text{Formula (1)}.$$

(v) Method for Evaluating Removal Rate of Dextran with Weight-Average Molecular Weight of 40,000 Da

With distilled water, 1,000 ppm of dextran (manufactured by Sigma-Aldrich Co. LLC; weight-average molecular weight: 40,000 Da) was mixed to prepare an aqueous dextran solution. The prepared aqueous dextran solution was supplied to the porous membrane at 25°C so as to have a transmembrane pressure difference of 10 kPa and subjected to crossflow filtration at a crossflow linear velocity of 1.0 m/sec to sample the permeate. The aqueous dextran solution (liquid to be filtered) supplied to the porous membrane was sampled at the timing when the permeate was sampled. The refractive indices of the permeate and the liquid to be filtered were measured, and the removal rate T (%) was determined on the basis of Formula (3).

T = {(refractive index of liquid to be filtered) - (refractive index of premeate)} / (refractive index of liquid to be filtered) $\times$ 100          Formula (3) .

(vi) Surface Structure of Surface Portion (Pore Diameter, Number, Standard Deviation)

The porous membrane was vacuum-dried at 25°C for 12 hours and then observed with a SEM (manufactured by Hitachi High-Technologies Corporation; S-5500) at 30,000 to 100,000 fold magnification. An image obtained by observing the surface of the porous membrane with the SEM was binarized using free software "ImageJ". When binarization was performed, Create Background was performed with 1 pixel in Subtract Background, and then the condition: RenyiEntropy was selected in Threshold (threshold for binarization). In the obtained binarized image, the area of each surface pore was determined by selecting Area in Analyze Particles, and the diameter calculated assuming each surface pore as a circle was defined as the surface pore diameter. When the average value of the surface pore diameters was to be determined, the surface pore diameters of 1,000 or more pores were averaged. Similarly, the standard deviation was obtained from the data of each surface pore diameter. The number of surface pores was divided by the total area of the observed region to obtain the number of surface pores per unit area.

(vii) Sectional Structure of Outermost Surface Portion (Presence or Absence of Nano-Network Structure, Pore Diameter, Number, Standard Deviation)

A porous membrane embedded using a commercially available embedding agent for producing a frozen tissue section production (manufactured by Tissue-Tek; O.C.T. Compound) was cut to collect a slice with a thickness of 100 nm in a direction perpendicular to the surface of the porous membrane at -40°C using a cryo-ultramicrotome (manufactured by Leica; FC7), and the slice was vacuumdried at room temperature for 12 hours. The section of the outermost surface portion of the porous membrane was observed with a TEM (manufactured by JEOL Ltd.; JEM-1400Plus) to obtain an image, and the image was binarized using free software "ImageJ". When binarization was performed, the condition Minimum was selected in Threshold (threshold for binarization). In the obtained binarized image, the area of each sectional pore was determined by selecting Area in Analyze Particles, and the diameter calculated assuming each sectional pore as a circle was defined as the sectional pore diameter.

When the average value of the sectional pore diameters was to be determined, the sectional pore diameters of 1,000 or more sectional pores were averaged. In addition, the number of sectional pores was divided by the total area of the analyzed region to obtain the number of sectional pores per unit area. At this time, similarly to the surface pore diameter, an image including 1,000 or more pores was analyzed to calculate the number. Similarly, the standard deviation was obtained from the data of each sectional pore diameter. In the surface portion of the porous membrane, in the case in which the outermost surface portion spanning 2 $\mu$m in thickness from the surface had a network structure in which the average value of sectional pore diameters [nm] in a section of the outermost surface portion was 1 nm to 99 nm and the number of sectional pores was 100 pores/$\mu m^2$ to 1,000 pores/$\mu m^2$, it was determined that the porous membrane had a nano-network structure.

(viii) Self-Diffusion Coefficient of Polymer

The self-diffusion coefficient was determined by all-atom molecular dynamics calculation. A polymer solution system was produced so as to have a polymer concentration (wt%) to be actually used. At this time, one model polymer chain was modeled so as to have a molecular weight of 800 to 6,000 that was 1/200 to 1/5 of the weight-average molecular weight of the polymer actually used. GAFF2 was used as a potential parameter used in the molecular dynamics calculation. An isothermal-isobaric ensemble was constructed by controlling the temperature to 25°C and the pressure to 1 bar. At this time, the short-ranged Lennard-Johns interaction was handled by applying a switch function from 1.0 nm to the cutoff 1.2 nm, and the long-range electrostatic interaction was calculated by the Particle Mesh Ewald method. Molecular dynamics calculation was performed with the isothermal-isobaric ensemble until the density became constant, then the unit cell length was adjusted so as to have an average density, and additional calculation of 11 ns was performed with an isothermal ensemble. Using the trajectory for 10 ns, the mean square displacement (MSD) of each atom of the polymer was obtained, and the self-diffusion coefficient was calculated from following Formula (4). At this time, it was confirmed that the value obtained by dividing log (MSD) by log (t) was in the range of 0.9 to 1.1 for the ranges of MSD and t used for the calculation of D. When a plurality of types of polymers were mixed to form a polymer solution, a value obtained by determining the weighted average of the self-diffusion coefficients of respective polymers based on the percentages by weight of the polymers was defined as the self-diffusion coefficient of the polymers in the polymer solution.

$$D = MSD/6t \quad \cdots\cdots \quad Formula\ (4)$$

D: self-diffusion coefficient, t: time.

(ix) Filtration Evaluation Method for Aqueous Gelatin Solution

With distilled water, 1,000 ppm of gelatin (manufactured by Nitta Gelatin Inc.; Gelatin Silver) was mixed to prepare an aqueous gelatin solution. The prepared aqueous gelatin solution was supplied to the porous membrane at 60°C so as to have a transmembrane pressure difference of 120 kPa and subjected to crossflow filtration at a crossflow linear velocity of 1.0 m/sec to sample the permeate. The aqueous gelatin solution (liquid to be filtered) supplied to the porous membrane was sampled at the timing when the permeate was sampled. The refractive indices of the permeate and the liquid to be filtered were measured, and the removal rate (%) $T_{gelatin}$ was determined on the basis of Formula (5). The filtration flux (L/m$^2$/h) when the amount of the permeate reached 20 L/m$^2$ was calculated.

$T_{gelatin}$ = {(absorbance of liquid to be filtered at 292 nm) - (absorbance of permeate at 292 nm)} / (absorbance of liquid to be filtered at 292 nm) $\times$ 100 

Formula (5).

(x) Filtration Evaluation Method for Apple Juice

Apple juice (manufactured by Ichiryu Store; fully ripened apple juice) was supplied to the porous membrane at 25°C so as to have a transmembrane pressure difference of 100 kPa, the whole amount was filtered, and the permeate was sampled. The apple juice (liquid to be filtered) supplied to the porous membrane was sampled at the timing when the permeate was sampled. The turbidities of the permeate and the liquid to be filtered were measured, and the removal rate (%) $T_{apple}$ was determined on the basis of Formula (6). The filtration flux when the amount of the permeate reached 6 L/m$^2$ was calculated.

$$T_{apple} = \{(\text{turbidity of liquid to be filtered}) - (\text{turbidity of premeate})\} / (\text{turbidity of liquid to be filtered}) \times 100 \qquad \text{Formula (6).}$$

(xi) Filtration Evaluation Method for Industrial Wastewater

Wastewater (TOC: 30 mg/L, turbidity: 11 NTU) from a chemical factory was supplied to a porous membrane at 25°C so as to have a transmembrane pressure difference of 100 kPa, the whole amount was filtered, and the amount of the permeate was measured. When the amount of the permeate reached 28 L/m$^2$, backfiltration was performed until the backfiltration permeation amount reached 3 L/m$^2$ so that the transmembrane pressure difference was 150 kPa. Filtration and backfiltration were repeatedly performed, and the ratio (F2/F1) of the filtration fluxes between the filtration flux (F1) immediately after the start of filtration and the filtration flux (F2) immediately after the start of filtration after the amount of the permeate per unit area reached 400 L/m$^2$ or more was calculated and defined as the initial ratio of the filtration fluxes. As the initial ratio of the filtration fluxes is closer to 1, the initial characteristics are maintained, the porous membrane is less likely to be clogged even after long-term use, and the standard at which good filtration can be maintained is 0.50 or more.

(Example 1)

As the porous membrane, a hollow fiber porous membrane containing a support obtained by the following production method was used. A supporting membrane raw solution was prepared by mixing 38 mass% of PVDF (manufactured by Kureha Corporation; KF 1300, weight-average molecular weight: 350,000 Da) and 62 mass% of γ-butyrolactone and dissolving them at 160°C. The supporting membrane raw solution was discharged from a double tube spinneret with an accompanying flow of an 85-mass% aqueous γ-butyrolactone solution as a hollow-part forming liquid. The discharged supporting membrane raw solution was coagulated in a cooling bath containing an 85-mass% aqueous γ-butyrolactone solution at a temperature of 20°C placed 30 mm below the spinneret to prepare a hollow fiber-like support having a spherical structure.

A polymer solution having a composition ratio shown in Table 1 was prepared by mixing 12 mass% of PVDF1 (manufactured by Arkema K.K.; "Kynar" (registered trademark) 710, weight-average molecular weight: 180,000 Da), 4.8 mass% of cellulose diacetate (manufactured by Eastman Chemical Company; CA-398-3), 2.4 mass% of cellulose triacetate (manufactured by Eastman Chemical Company; CA-436-80S), 68.8 mass% of NMP, and 12 mass% of 2P and stirring them at 120°C for 4 hours.

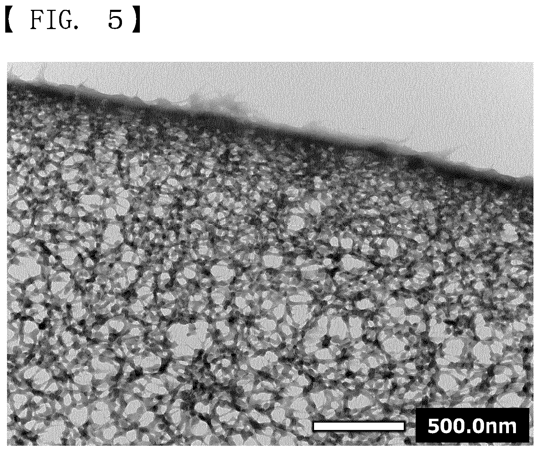

Next, the polymer solution was uniformly applied to the outer surface of the hollow fiber-like support at 10 m/min (thickness: 50 μm). The support to which the polymer solution was applied was taken up at 10 m/min, and 1 second after application, the product was passed through a coagulation bath of distilled water at 25°C so as to be immersed for 10 seconds and coagulated to form a porous membrane having a three-dimensional network structure. The evaluation results of the obtained porous membrane are shown in Table 1. In the porous membrane, the surface portion spanning 10 μm in thickness from the surface was denser than the inner portion. An image obtained by observing a section of the outermost surface portion of the porous membrane with a TEM is shown in Fig. 5. It was determined from the sectional pore diameter and the number of sectional pores that the porous membrane had a nano-network structure. The obtained porous membrane had a tortuosity R of 4.9, a dextran removal rate T of 72%, a number of surface pores of 444 pores/μm$^2$, and a value X obtained by dividing the number of surface pores by the average value of surface pore diameters of 62 pores/μm$^2$/nm, which were satisfactory.

Further, as a result of evaluating the long-term stability by (xi) the filtration evaluation method for industrial wastewater, the initial ratio (F2/F1) between the filtration flux (F2) after the amount of the permeate reached 400 L/m$^2$ and the filtration flux (F1) immediately after the start of filtration was 0.63. The filtration flux could be maintained even after long-term use. The results of evaluation are shown in Table 1.

(Example 2)

A porous membrane was obtained by performing membrane formation in the same manner as in Example 1 except that 2P in the polymer solution was changed to ε-CL. The evaluation results of the porous membrane are shown in Table 1. In the porous membrane, the surface portion spanning 10 μm in thickness from the surface was denser than the inner portion. The obtained porous membrane had a tortuosity R of 4.1, a dextran removal rate T of 65%, a number of surface pores of 291 pores/μm², and a value X obtained by dividing the number of surface pores by the average value of surface pore diameters of 33 pores/μm²/nm, which were satisfactory. In (xi) the filtration evaluation method for industrial wastewater, the ratio (F2/F1) of the filtration fluxes was 0.58, and the filtration flux could be maintained even after long-term use.

(Example 3)

A porous membrane was obtained by performing membrane formation in the same manner as in Example 1 except that the composition ratio of the polymer solution was changed as shown in Table 1. The evaluation results of the porous membrane are shown in Table 1. In the porous membrane, the surface portion spanning 10 μm in thickness from the surface was denser than the inner portion. The obtained porous membrane had a tortuosity R of 5.9, a dextran removal rate T of 72%, a number of surface pores of 329 pores/μm², and a value X obtained by dividing the number of surface pores by the average value of surface pore diameters of 46 pores/μm²/nm, which were satisfactory. In (xi) the filtration evaluation method for industrial wastewater, the ratio (F2/F1) of the filtration fluxes was 0.55, and the filtration flux could be maintained even after long-term use.

(Example 4)

A porous membrane was obtained by performing membrane formation in the same manner as in Example 1 except that the composition ratio of the polymer solution was changed as shown in Table 1. The porous membrane had a nano-network structure. The evaluation results of the porous membrane are shown in Table 1. In the porous membrane, the surface portion spanning 10 μm in thickness from the surface was denser than the inner portion. The obtained porous membrane had a tortuosity R of 4.9, a dextran removal rate T of 69%, a number of surface pores of 420 pores/μm², and a value X obtained by dividing the number of surface pores by the average value of surface pore diameters of 58 pores/μm²/nm, which were satisfactory. In (xi) the filtration evaluation method for industrial wastewater, the ratio (F2/F1) of the filtration fluxes was 0.62, and the filtration flux could be maintained even after long-term use.

(Example 5)

The filterability through the porous membrane was evaluated using (ix) the filtration evaluation method for an aqueous gelatin solution. The porous membrane of Example 1 was used as a representative. When the aqueous gelatin solution was filtered, the removal rate $T_{gelatin}$ of gelatin was 65%, and the filtration flux was 70 L/m²/h, which were satisfactory. The filtration evaluation results of the gelatin solution are shown in Table 3. The porous membrane used for evaluation had a tortuosity R of 4.9, a dextran removal rate T of 72%, a number of surface pores of 444 pores/μm², and a value X obtained by dividing the number of surface pores by the average value of surface pore diameters of 62 pores/μm²/nm.

(Example 6)

The filterability through the porous membrane was evaluated using (x) the filtration evaluation method for apple juice. The porous membrane of Example 1 was used as a representative. When the apple juice was filtered, the removal rate $T_{apple}$ of apple juice was 99.9%, and the filtration flux was 37 L/m²/h, which were satisfactory. The filtration evaluation results of the apple juice liquid are shown in Table 4. The porous membrane used for evaluation had a tortuosity R of 4.9, a dextran removal rate T of 72%, a number of surface pores of 444 pores/μm², and a value X obtained by dividing the number of surface pores by the average value of surface pore diameters of 62 pores/μm²/nm.

(Comparative Example 1)

A porous membrane was obtained by performing membrane formation in the same manner as in Example 1 except that in the polymer solution, the entire solvent of was changed to NMP, and the composition ratio was changed. The evaluation results of the porous membrane are shown in Table 2. The porous membrane did not have a nano-network structure. In the porous membrane, the surface portion spanning 10 μm in thickness from the surface was denser than the inner portion, but the number of surface pores and the dextran removal rate T did not satisfy the conditions. In (xi) the filtration evaluation method for industrial wastewater, the initial ratio (F2/F1) of the filtration fluxes was 0.45, and the filtration flux decreased to half or less after long-term use.

(Comparative Example 2)

A porous membrane was obtained by performing membrane formation in the same manner as in Comparative Example 1 except that in the polymer solution, PVDF1 was changed to PVDF2 (manufactured by Arkema K.K.: HSV 900, melt viscosity: 4700 Pa·s) and the composition ratio was changed in the membrane formation of Comparative Example 1. The evaluation results of the porous membrane are shown in Table 2. In the porous membrane, the surface portion spanning 10 $\mu$m in thickness from the surface was denser than the inner portion, but the number of surface pores and the dextran removal rate T did not satisfy the conditions. In (xi) the filtration evaluation method for industrial wastewater, the initial ratio (F2/F1) of the filtration fluxes was 0.40, and the filtration flux significantly decreased after long-term use.

(Comparative Example 3)

A porous membrane was obtained by performing membrane formation in the same manner as in Comparative Example 1 except that PVDF1 in the polymer solution was changed to PVDF3 (manufactured by Solvay S.A.: Solef 9009) in the membrane formation of Comparative Example 1. The evaluation results of the porous membrane are shown in Table 2. The porous membrane did not have a nano-network structure. In the porous membrane, the surface portion spanning 10 $\mu$m in thickness from the surface was denser than the inner portion, but the number of surface pores, the tortuosity R, and the dextran removal rate T did not satisfy the conditions. In (xi) the filtration evaluation method for industrial wastewater, the initial ratio (F2/F1) of the filtration fluxes was 0.40, and the filtration flux significantly decreased after long-term use.

(Comparative Example 4)

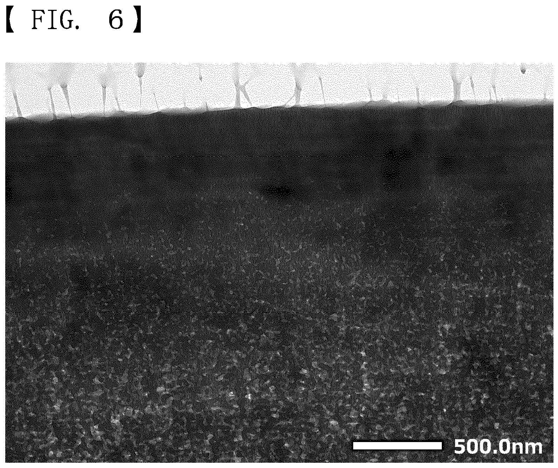

An ST membrane manufactured by Synder Filtration was used as the porous membrane in Comparative Example 4. An image obtained by observing a section of the outermost surface portion of the porous membrane with a TEM is shown in Fig. 6. The results of evaluation are shown in Table 2. The porous membrane did not have a nano-network structure. In the porous membrane, the surface portion spanning 10 $\mu$m in thickness from the surface was denser than the inner portion, but the number of surface pores, the tortuosity R, and the dextran removal rate T did not satisfy the conditions. In (xi) the filtration evaluation method for industrial wastewater, the amount of the permeate was remarkably small, and it was difficult to measure the filtration flux, which was below the measurement lower limit. It is considered that since the number of surface pores was small and the dextran removal rate T was excessively high, the filtration flux was extremely low.

(Comparative Example 5)

A porous membrane was obtained by performing membrane formation in the same manner as in Comparative Example 3 except that the composition ratio of the polymer solution was changed. The composition ratio of 2P was set to 30 mass%. The evaluation results of the porous membrane are shown in Table 2. In the porous membrane, the surface portion spanning 10 um in thickness from the surface was denser than the inner portion, but the number of surface pores, the tortuosity R, and the dextran removal rate T did not satisfy the conditions. In (xi) the filtration evaluation method for industrial wastewater, the initial ratio (F2/F1) of the filtration fluxes was 0.45, and the filtration flux significantly decreased after long-term use.

(Comparative Example 6)

A porous membrane was obtained by performing membrane formation in the same manner as in Example 1 except that 2P in the polymer solution was changed to $\gamma$-butyrolactone. The evaluation results of the porous membrane are shown in Table 2. In the porous membrane, the surface portion spanning 10 $\mu$m in thickness from the surface was denser than the inner portion, but the average value of surface pore diameters, the tortuosity R, and the dextran removal rate T did not satisfy the conditions. In (xi) the filtration evaluation method for industrial wastewater, the initial ratio (F2/F1) of the filtration fluxes was 0.40, and the filtration flux significantly decreased after long-term use.

(Comparative Example 7) The filterability through the porous membrane was evaluated using (ix) the filtration evaluation method for an aqueous gelatin solution. The porous membrane of Comparative Example 1 was used as a representative. When the aqueous gelatin solution was filtered, the removal rate $T_{gelatin}$ of gelatin was 63%, and the filtration flux was as low as 58 $L/m^2/h$, so that sufficient filtration was not possible. The number of surface pores of the porous membrane used for the evaluation was 196 pores/$\mu m^2$, the tortuosity R was 6.4, and the dextran removal rate T was 55%.

(Comparative Example 8)

The filterability through the porous membrane was evaluated using (x) the filtration evaluation method for apple juice. The porous membrane of Comparative Example 4 was used as a representative. When the apple juice was filtered, the removal rate $T_{apple}$ of apple juice was 99.9%, and the filtration flux was as low as 4 $L/m^2/h$, which was poor. The number of surface pores of the porous membrane used for the evaluation was below the observation lower limit, the tortuosity R was 66.9, and the dextran removal rate T was 99.9%. It is considered that since the number of surface pores was small and the dextran removal rate T was excessively high, the filtration flux was remarkably low.

(Comparative Example 9)

A polymer solution was prepared by mixing 12 mass% of PVDF3 (manufactured by Solvay S.A.: Solef 9009), 7 mass% of cellulose triacetate: CTA (manufactured by Daicel Corporation; LT-35), and 81 mass% of NMP and stirring them at 120°C for 4 hours.

Next, the polymer solution was uniformly applied to the outer surface of the hollow fiber-like support at 10 m/min (thickness: 50 um). The support to which the polymer solution was applied was taken up at 10 m/min, and 1 second after application, the product was passed through a coagulation bath of distilled water at 15°C so as to be immersed for 10 seconds and coagulated to form a porous membrane having a three-dimensional network structure. The evaluation results of the obtained porous membrane are shown in Table 5. In the porous membrane, the surface portion spanning 10 um in thickness from the surface was denser than the inner portion. The obtained porous membrane had a tortuosity R of 6.0, a dextran removal rate T of 710, a number of surface pores of 49 pores/$\mu m^2$, and a value X obtained by dividing the number of surface pores by the average value of surface pore diameters of 6 pores/$\mu m^2$/nm, so that it was determined that the porous membrane did not have a nano-network structure from the sectional pore diameter and the number of sectional pores. In (xi) the filtration evaluation method for industrial wastewater, the initial ratio (F2/F1) of the filtration fluxes was 0.42, and the filtration flux significantly decreased after long-term use.

(Comparative Example 10)

A porous membrane was obtained by performing membrane formation in the same manner as in Comparative Example 1 except that the temperature of the coagulation bath was changed to 6°C. The evaluation results of the porous membrane are shown in Table 5. In the porous membrane, the surface portion spanning 10 $\mu m$ in thickness from the surface was denser than the inner portion. The obtained porous membrane had a tortuosity R of 13.2, a dextran removal rate T of 70%, a number of surface pores of 78 pores/$\mu m^2$, a value X obtained by dividing the number of surface pores by the average value of surface pore diameters of 10 pores/$\mu m^2$/nm, and an initial ratio (F2/F1) of the filtration fluxes of 0.37 in (xi) the filtration evaluation method for industrial wastewater, and the filtration flux significantly decreased after long-term use.

(Comparative Example 11)

A polymer solution was prepared by mixing 20 mass% of polyethersulfone: PES (manufactured by SUMIKAEXCEL: 5900P), 4.1 mass% of polyvinylpyrrolidone: PVP (manufactured by Nippon Shokubai Co., Ltd.; K-30), 4.1 mass% of polyethylene glycol: PEG (manufactured by FUJIFILM Wako Pure Chemical Corporation: PEG 300), 35.9 mass% of 2P, and 35.9 mass% of NMP and stirring them at 120°C for 4 hours.

Next, the polymer solution was uniformly applied to the outer surface of the hollow fiber-like support at 10 m/min (thickness: 50 $\mu m$). The support to which the polymer solution was applied was taken up at 10 m/min, and 1 second after application, the product was passed through a coagulation bath of distilled water at 25°C so as to be immersed for 30 seconds and coagulated to form a porous membrane having a three-dimensional network structure. The evaluation results of the obtained porous membrane are shown in Table 5. In the porous membrane, the surface portion spanning 10 $\mu m$ in thickness from the surface was denser than the inner portion. The obtained porous membrane had a dextran removal rate T of 24%, a number of surface pores of 2 pores/$\mu m^2$, and a value X obtained by dividing the number of surface pores by the average value of surface pore diameters of 0.01 pores/$\mu m^2$/nm, the amount of the permeate was remarkably small in (xi) the filtration evaluation method for industrial wastewater, and it was difficult to measure the filtration flux, which was below the measurement lower limit. It is considered that since the number of surface pores was small and the dextran removal rate T was low, the filtration flux was extremely low.

(Comparative Example 12)

A polymer solution was prepared by mixing 10 mass% of cellulose diacetate: CDA (manufactured by Daicel Corporation: L-70), 4.1 mass% of polyvinylpyrrolidone: PVP (manufactured by Nippon Shokubai Co., Ltd.; K-30), 4.1 mass% of polyethylene glycol: PEG (manufactured by FUJIFILM Wako Pure Chemical Corporation: PEG 300), 40.9 mass% of 2P, and 40.9 mass% of NMP and stirring them at 120°C for 4 hours.

Next, the polymer solution was uniformly applied to the outer surface of the hollow fiber-like support at 10 m/min (thickness: 50 um). The support to which the polymer solution was applied was taken up at 10 m/min, and 1 second after application, the product was passed through a coagulation bath of distilled water at 25°C so as to be immersed for 30 seconds and coagulated to form a porous membrane having a three-dimensional network structure. The evaluation results of the obtained porous membrane are shown in Table 5. In the porous membrane, the surface portion spanning 10 um in thickness from the surface was denser than the inner portion. The obtained porous membrane had a dextran removal rate T of 43%, a number of surface pores of 9 pores/$\mu$m$^2$, a value X obtained by dividing the number of surface pores by the average value of surface pore diameters of **0.4** pores/$\mu$m$^2$/nm, and an initial ratio (F2/F1) of the filtration fluxes of 0.47 in (xi) the filtration evaluation method for industrial wastewater, and the filtration flux significantly decreased after long-term use.

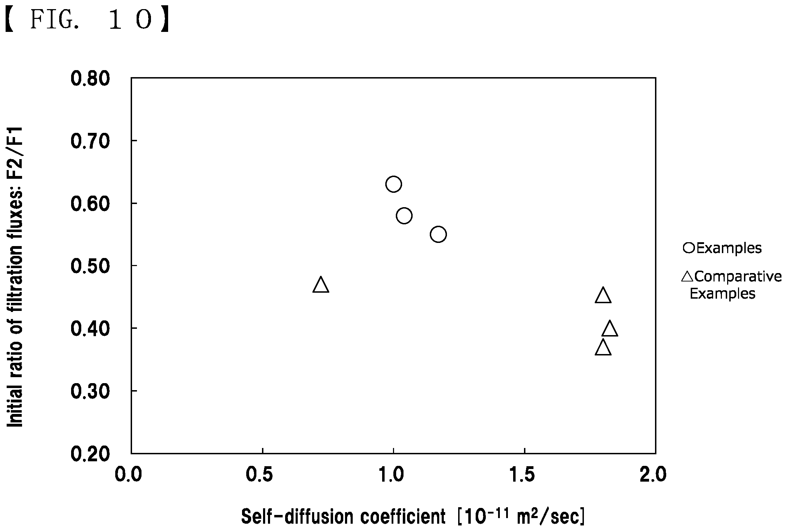

Fig. 10 shows the relationship between the self-diffusion coefficient and the initial ratio (F2/F1) of filtration fluxes in the examples and the comparative examples. From the examples and the comparative examples, the initial ratio of the filtration fluxes was 0.50 or more when the self-diffusion coefficient was in the range of $0.8 \times 10^{-11}$ m$^2$/sec to $1.6 \times 10^{-11}$ m$^2$/sec, and good filtration performance was maintained even after long-time operation.

[Table 1]

| | | | Example 1 | Example 2 | Example 3 | Example 4 |
|---|---|---|---|---|---|---|
| Membrane formation condition | Composition of polymer solution | wt% | PVDF1/CTA/CDA/NMP/2P = 12/2.4/4.8/68.8/12 | PVDFl/CTA/CDA/NMP/$\epsilon$-CL = 12/2.4/4.8/68.8/12 | PVDF1/CTA/CDA/NMP/2P = 12/3.6/3.6/68.8/12 | PVDF1/CTA/CDA/NMP/2P = 12/2.1/5.1/68.8/12 |
| | Hydrogen bonding solvent | - | 2P | $\epsilon$-CL | 2P | 2P |
| | Hydrogen bonding polymer | - | CTA, CDA | CTA, CDA | CTA, CDA | CTA, CDA |
| | Acceptor number of solvent/donor number of polymer | mol/mol | 7.2 | 5.4 | 9.6 | 6.8 |
| | Donor number of solvent/ acceptor number of polymer | mol/mol | 2.2 | 1.7 | 2.1 | 2.2 |
| | Hydrogen bonding polymer/total polymer | wt% | 38 | 38 | 38 | 38 |
| | Self-diffusion coefficient | $\times 10^{-11}$ m²/sec | 1.0 | 1.0 | 1.2 | - |
| | Non-solvent temperature | ° C | 25 | 25 | 25 | 25 |

(continued)

| | | | Example 1 | Example 2 | Example 3 | Example 4 |
|---|---|---|---|---|---|---|
| Characteristics of porous membrane | Porosity: $\varepsilon$ | % | 64 | 65 | 64 | 64 |
| | Permeability coefficient: k | $\times 10^{-17}$ m2 | 2.0 | 1.6 | 1.4 | 2.0 |
| | Pore specific volume: V | $\times 10^{-8}$ m3/g | 8.3 | 4.7 | 8.3 | 8.3 |
| | Specific surface area: S | m2/g | 21.4 | 16.7 | 21.4 | 21.4 |
| | Tortuosity: R | - | 4.9 | 4.1 | 5.9 | 4.9 |
| | Removal rate: T | % | 72 | 65 | 72 | 69 |
| | Average value of surface pore diameters | nm | 7.2 | 8.9 | 7.2 | 7.2 |
| | Number of surface pores | pores/ $\mu$m2 | 444 | 291 | 329 | 420 |
| | Number of surface pores/ average value of surface pore diameters: X | pores/ $\mu$m2/nm | 62 | 33 | 46 | 58 |
| | Average value of sectional pore diameters | nm | 33 | - | - | 36 |
| | Number of sectional pores | pores/ $\mu$m2 | 175 | - | - | 157 |
| | Number of sectional pores/ average value of sectional pore diameters: Y | pores/ $\mu$m2/nm | 5 | - | - | 4 |
| | Presence or absence of nano-network structure | - | Present | - | - | Present |
| | Standard deviation of sectional pore diameter | nm | 25 | - | - | 31 |
| | Standard deviation of surface pore diameter | nm | 2.5 | 2.3 | 2.5 | 2.6 |

EP 4 410 411 A1

(continued)

| | | Example 1 | Example 2 | Example 3 | Example 4 |
|---|---|---|---|---|---|
| Evaluation result | Initial ratio of filtration fluxes: F2/F1 | 0.63 | 0.58 | 0.55 | 0.62 |

[Table 2-1]

| | | | Comparative Example 1 | Comparative Example 2 | Comparative Example 3 |
|---|---|---|---|---|---|
| Membrane formation condition | Composition of polymer solution | wt% | PVDF1/CTA/CDA/ NMP = 12/4.0/ 4.0/80 | PVDF2/CTA/CDA/ NMP = 10/3/ 3/84 | PVDF3/CTA/CDA/ NMP = 12/4.0/ 4.0/80 |
| | Hydrogen bonding solvent | - | (Not subject) | (Not subject) | (Not subject) |
| | Hydrogen bonding polymer | - | CTA, CDA | CTA, CDA | CTA, CDA |
| | Acceptor number of solvent/ donor number of polymer | mol/mol | (Not subject) | (Not subject) | (Not subject) |
| | Donor number of solvent/ acceptor number of polymer | mol/mol | (Not subject) | (Not subject) | (Not subject) |
| | Hydrogen bonding polymer/total polymer | wt% | 40 | 38 | 40 |
| | Self-diffusion coefficient | $\times\ 10^{-11}$ m$^2$/sec | 1.8 | - | - |
| | Non-solvent temperature | ° C | 25 | 25 | 25 |

(continued)

| | | | Comparative Example 1 | Comparative Example 2 | Comparative Example 3 |
|---|---|---|---|---|---|
| Characteristics of porous membrane | Porosity: $\varepsilon$ | % | 62 | 65 | 60 |
| | Permeability coefficient: k | $\times 10^{-17}$ m$^2$ | 2.0 | 1.7 | 1.0 |
| | Pore specific volume: V | $\times 10^{-8}$ m$^3$/g | 14 | 12 | 10 |
| | Specific surface area: S | m$^2$/g | 27.5 | 25.0 | 20.6 |
| | Tortuosity: R | - | 6.4 | 6.6 | 8.4 |
| | Removal rate: T | % | 55 | 44 | 57 |
| | Average value of surface pore diameters | nm | 15 | 30 | 10 |
| | Number of surface pores | pores/$\mu$m$^2$ | 196 | 176 | 76 |
| | Number of surface pores/ average value of surface pore diameters: X | pores/$\mu$m$^2$/nm | 13 | 6 | 8 |
| | Average value of sectional pore diameters | nm | 40 | - | 37 |
| | Number of sectional pores | pores/$\mu$m$^2$ | 97 | - | 91 |
| | Number of sectional pores/ average value of sectional pore diameters: Y | pores/pm2/nm | 2 | - | 2 |
| | Presence or absence of nano-network structure | - | Absent | - | Absent |
| | Standard deviation of sectional pore diameter | nm | 38 | - | 62 |
| | Standard deviation of surface pore diameter | nm | 6.0 | 2.3 | 4.1 |

24

(continued)

| | | | Comparative Example 1 | Comparative Example 2 | Comparative Example 3 |
|---|---|---|---|---|---|
| Evaluation result | Initial ratio of filtration fluxes: F2/F1 | | 0.45 | 0.40 | 0.40 |

[Table 2-2]

| | | | Comparative Example 4 | Comparative Example 5 | Comparative Example 6 |
|---|---|---|---|---|---|
| Membrane formation condition | Composition of polymer solution | wt% | No Information | PVDF3/CDA/NMP/ 2P = 12/7/ 51/30 | PVDF1/CTA/CDA/ NMP/GBL = 12/4.0/4.0/68/12 |
| | Hydrogen bonding solvent | | No Information | 2P | (Not subject) |
| | Hydrogen bonding polymer | | No Information | CDA | CTA, CDA |
| | Acceptor number of solvent/donor number of polymer | mol/mol | No Information | 5.0 | (Not subject) |
| | Donor number of solvent/acceptor number of polymer | mol/mol | No Information | 2.5 | (Not subject) |
| | Hydrogen bonding polymer/total polymer | wt% | No Information | 58 | 40 |
| | Self-diffusion coefficient | $\times 10^{-11}$ m²/sec | No Information | - | 1.8 |
| | Non-solvent temperature | ° C | No Information | 25 | 25 |

(continued)

| | | | Comparative Example 4 | Comparative Example 5 | Comparative Example 6 |
|---|---|---|---|---|---|
| Characteristics of porous membrane | Porosity: $\varepsilon$ | % | 53 | 60 | 52 |
| | Permeability coefficient: k | $\times 10^{-17}$ $m^2$ | 0.1 | 1.8 | 1.0 |
| | Pore specific volume: V | $\times 10^{-8}$ $m^3/g$ | 25.7 | 5.9 | 12.4 |
| | Specific surface area: S | $m^2/g$ | 18.6 | 17.9 | 23.3 |
| | Tortuosity: R | - | 66.9 | 4.3 | 8.7 |
| | Removal rate: T | % | 99.9 | 47 | 52 |
| | Average value of surface pore diameters | nm | Below observation lower limit | 20 | 13 |
| | Number of surface pores | pores/ $\mu m^2$ | Below observation lower limit | 172 | 250 |
| | Number of surface pores/average value of surface pore diameters: X | pores/ $\mu m^2$/nm | Below observation lower limit | 9 | 19 |
| | Average value of sectional pore diameters | nm | Below observation lower limit | - | - |
| | Number of sectional pores | pores/ $\mu m^2$ | Below observation lower limit | - | - |
| | Number of sectional pores/average value of sectional pore diameters: Y | pores/ $\mu m^2$/nm | Below observation lower limit | - | - |
| | Presence or absence of nano-network structure | - | Absent | - | - |
| | Standard deviation of sectional pore diameter | nm | Below observation lower limit | - | - |
| | Standard deviation of surface pore diameter | nm | Below observation lower limit | 1.7 | 6.4 |
| Evaluation result | Initial ratio of filtration fluxes: F2/F1 | | Below measurement lower limit | 0.45 | 0.40 |

[Table 3]

| | | | Example 5 | Comparative Example 7 |
|---|---|---|---|---|
| Evaluation result | Number of surface pores | pores/$\mu$m$^2$ | 444 | 196 |
| | Tortuosity: R | - | 4.9 | 6.4 |
| | Removal rate: T | % | 72 | 55 |
| | Gelatin removal rate: $T_{gelatin}$ | % | 65 | 63 |
| | Filtration flux | L/m$^2$/h | 70 | 58 |

[Table 4]

| | | | Example 6 | Comparative Example 8 |
|---|---|---|---|---|
| Evaluation result | Number of surface pores | pores/$\mu$m$^2$ | 444 | Below observation lower limit |
| | Tortuosity: R | - | 4.9 | 66.9 |
| | Removal rate: T | % | 72 | 99.9 |
| | Apple juice removal rate: $T_{apple}$ | % | 99.9 | 99.9 |
| | Filtration flux | L/m$^2$/h | 37 | 4 |

[Table 5]

| | | | Comparative Example 9 | Comparative Example 10 | Comparative Example 11 | Comparative Example 12 |
|---|---|---|---|---|---|---|
| Membrane formation condition | Composition of polymer solution | wt% | PVDF3/CTA/NMP = 12/7/81 | PVDF1/CTA/CDA/NMP = 12/4.0/4.0/80 | PES/PVP/PEG/ 2P/NMP = 20/4.1/4.1/35.9/35.9 | CDA/PVP/PEG/ 2P/NMP = 10/4.1/4.1/40.9/40.9 |
| | Hydrogen bonding solvent | | (Not subject) | (Not subject) | 2P | 2P |
| | Hydrogen bonding polymer | | CTA | CTA, CDA | Absent | CDA |
| | Acceptor number of solvent/donor number of polymer | mol/mol | (Not subject) | (Not subject) | (Not subject) | 11.8 |
| | Donor number of solvent/acceptor number of polymer | mol/mol | (Not subject) | (Not subject) | (Not subject) | 5.9 |
| | Hydrogen bonding polymer/total polymer | wt% | 37 | 40 | (Not subject) | 100 |
| | Self-diffusion coefficient | $\times 10^{-11}$ $m^2$/sec | - | 1.8 | - | 0.7 |
| | Non-solvent temperature | °C | 15 | 6 | 25 | 25 |
| Characteristics | Porosity: $\varepsilon$ | % | 66 | 62 | - | - |
| | Permeability coefficient: k | $\times 10^{-17}$ $m^2$ | 1.7 | 0.5 | 0.3 | 1.7 |
| | Pore specific volume: V | $\times 10^{-8}$ $m^3$/g | 7.1 | 14 | - | - |
| | Specific surface area: S | $m^2$/g | 16.4 | 27.5 | - | - |
| | Tortuosity: R | - | 6.0 | 13.2 | - | - |
| | Removal rate: T | % | 71 | 70 | 24 | 43 |
| | Average value of surface pore diameters | nm | 8.2 | 8.0 | 227 | 22 |
| | Number of surface pores | pores/ $\mu m^2$ | 49 | 78 | 2 | 9 |

28

(continued)

| | | | Comparative Example 9 | Comparative Example 10 | Comparative Example 11 | Comparative Example 12 |
|---|---|---|---|---|---|---|
| of porous membrane | Number of surface pores/average value of surface pore diameters: X | pores/ $\mu$m$^2$/nm | 6 | 10 | 0.01 | 0.4 |
| | Average value of sectional pore diameters | nm | 38 | - | - | - |
| | Number of sectional pores | pores/ $\mu$m$^2$ | 92 | - | - | - |
| | Number of sectional pores/ average value of sectional pore diameters: Y | pores/ $\mu$m$^2$/nm | 2 | - | - | - |
| | Presence or absence of nano-network structure | - | Absent | - | - | - |
| | Standard deviation of sectional pore diameter | nm | 63 | - | - | - |
| | Standard deviation of surface pore diameter | nm | 2.8 | 1.9 | 99 | 11.9 |
| Evaluation result | Initial ratio of filtration fluxes: F2/F1 | | 0.42 | 0.37 | Below measurement lower limit | 0.47 |

DESCRIPTION OF REFERENCE SIGNS

101: Porous membrane
102: Surface portion
103: Inner portion
201: Coarse contaminant component
202: Fine contaminant component
300: Polymer solution
301: Polymer-rich phase
302: Solvent-rich phase
FL: Filtration direction

**Claims**

1. A porous membrane comprising, in at least one surface, a surface portion spanning 10 $\mu$m in thickness from the surface, being denser than an inner portion, and having a removal rate T of dextran having a weight-average molecular weight of 40,000 Da of 60% to 95%,
   wherein a number of pores (hereinafter referred to as surface pores) per unit area observed on the surface of the surface portion is 200 pores/$\mu$m$^2$ to 2,000 pores/$\mu$m$^2$.

2. The porous membrane according to claim 1, wherein an average value of surface pore diameters [nm] of the surface portion is 5.0 nm to 12 nm.

3. The porous membrane according to claim 1 or 2, wherein a value X obtained by dividing the number of the surface pores per unit area [pores/$\mu$m$^2$] by an average value of the surface pore diameters [nm] is 30 to 100 pores/$\mu$m$^2$/nm.

4. The porous membrane according to any one of claims 1 to 3, wherein the surface portion has a tortuosity R represented by Formula (1) of 1.0 to 8.0:

$$R = (\varepsilon/2k)^{1/2} \cdot V/S \quad \cdots\cdots \quad \text{Formula (1)},$$

   where

   $\varepsilon$: porosity, k: permeability coefficient [m$^2$],
   V: pore specific volume [m$^3$/g], S: specific surface area [m$^2$/g], and
   the permeability coefficient k is a coefficient calculated from Formula (2) using a pure water permeation amount Q [cm$^3$/sec] per membrane area A [m$^2$] at a pressure P [Pa] at 25°C:

$$k = 8.76 \times Q/A/P \times 10^{-15} \quad \cdots\cdots \quad \text{Formula (2)}.$$

5. The porous membrane according to any one of claims 1 to 4, the porous membrane having, in an outermost surface portion spanning 2 um in thickness from the surface of the surface portion, a nano-network structure having a number of pores (hereinafter referred to as sectional pores) per unit area observed in a section of the outermost surface portion of 100 pores/$\mu$m$^2$ to 1,000 pores/$\mu$m$^2$, and an average value of sectional pore diameters [nm] of 1 nm to 99 nm.

6. The porous membrane according to claim 5, wherein a value Y obtained by dividing the number of the sectional pores per unit area [pores/$\mu$m$^2$] by the average value of the sectional pore diameters [nm] is 3 to 10 pores/$\mu$m$^2$/nm.

7. The porous membrane according to claim 5 or 6, wherein a standard deviation of the sectional pore diameters [nm] of the outermost surface portion is 1.0 nm to 50 nm.

8. The porous membrane according to any one of claims 2 to 7, wherein a standard deviation of the surface pore diameters [nm] of the surface portion is 0.5 nm to 5.0 nm.

9. The porous membrane according to any one of claims 4 to 8, wherein the permeability coefficient k [$m^2$] represented by Formula (2) above at the tortuosity R is $0.5 \times 10^{-17}$ $m^2$ to $5.0 \times 10^{-17}$ $m^2$.

10. A method for manufacturing a porous membrane, the method comprising:

a step (A) of dissolving a polymer in a solvent to provide a polymer solution; and
a step (B) of then coagulating the polymer solution in a non-solvent to form a porous membrane, wherein
in the step (A), a self-diffusion coefficient [$m^2$/sec] of the polymer dissolved in the polymer solution is $0.8 \times 10^{-11}$ $m^2$/sec to $1.6 \times 10^{-11}$ $m^2$/sec, the self-diffusion coefficient being calculated by all-atom molecular dynamics calculation, and
in the step (B), the non-solvent contains 90 to 100 wt% of water, and a temperature of the non-solvent is 6°C to 45°C.

11. The method for manufacturing a porous membrane according to claim 10, wherein

in the step (A), the solvent contains a hydrogen bonding solvent having a hydrogen bond donor property and a hydrogen bond acceptor property and having a molecular weight of 500 Da or less, and
the dissolved polymer contains a polymer having a hydrogen bond donor property and/or a hydrogen bond acceptor property.

12. The method for manufacturing a porous membrane according to claim 11, wherein a value obtained by dividing a number of moles of a hydrogen bond acceptor functional group contained in the hydrogen bonding solvent in the step (A) by a number of moles of a hydrogen bond donor functional group contained in the polymer having the hydrogen bond donor property and/or the hydrogen bond acceptor property is 1.0 to 12.

13. The method for manufacturing a porous membrane according to claim 11 or 12, wherein a value obtained by dividing a number of moles of a hydrogen bond donor functional group contained in the hydrogen bonding solvent in the step (A) by a number of moles of a hydrogen bond acceptor functional group contained in the polymer having the hydrogen bond donor property and/or the hydrogen bond acceptor property is 0.5 to 5.0.

14. A liquid filtration method using the porous membrane according to any one of claims 1 to 9.

【FIG. 1】

FL

201

201

201

201

201

101

102

103

202

202

202

202

【 FIG. 2 】

【FIG. 3】

【FIG. 4】

(a)

300

(b)

301 302

(c)

301 302

(d)

301 302

(e)

301 302

(f)

301 302

【 FIG. 5 】

500.0nm

【 FIG. 6 】

500.0nm

【 FIG. 7 】

【FIG. 8】

【 FIG. 9 】

【 FIG. 1 0 】

## INTERNATIONAL SEARCH REPORT

International application No.

**PCT/JP2022/035592**

### A. CLASSIFICATION OF SUBJECT MATTER

***B01D 69/00***(2006.01)i; ***B01D 69/08***(2006.01)i; ***B01D 69/12***(2006.01)i; ***B01D 71/16***(2006.01)i; ***B01D 71/34***(2006.01)i
FI:    B01D69/00; B01D69/08; B01D69/12; B01D71/16; B01D71/34

According to International Patent Classification (IPC) or to both national classification and IPC

### B. FIELDS SEARCHED

Minimum documentation searched (classification system followed by classification symbols)

B01D53/22;61/00-71/82;C02F1/44

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2020/262490 A1 (TORAY INDUSTRIES, INC.) 30 December 2020 (2020-12-30) paragraphs [0024]-[0079] | 1-14 |
| Y | | 4-9, 11-14 |
| Y | WO 2018/182027 A1 (TORAY INDUSTRIES, INC.) 04 October 2018 (2018-10-04) paragraphs [0005]-[0066] | 4-9, 14 |
| Y | WO 2016/031834 A1 (ASAHI KASEI MEDICAL CO., LTD.) 03 March 2016 (2016-03-03) paragraph [0067] | 11-13 |
| Y | JP 1-176407 A (DAICEL CHEM IND LTD) 12 July 1989 (1989-07-12) p. 3, upper left column, line 18 to upper right column, line 5 | 11-13 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 November 2022** | **29 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/035592**

| Patent document cited in search report | | | Publication date (day/month/year) | Patent family member(s) | | | Publication date (day/month/year) |
|---|---|---|---|---|---|---|---|
| WO | 2020/262490 | A1 | 30 December 2020 | (Family: none) | | | |
| WO | 2018/182027 | A1 | 04 October 2018 | US | 2020/0038814 | A1 | |
| | | | | paragraphs [0010]-[0190] | | | |
| | | | | EP | 3603779 | A1 | |
| | | | | CN | 110475605 | A | |
| | | | | KR | 10-2019-0129890 | A | |
| WO | 2016/031834 | A1 | 03 March 2016 | US | 2017/0266626 | A1 | |
| | | | | paragraph [0166] | | | |
| | | | | US | 2021/0197133 | A1 | |
| | | | | EP | 3195922 | A1 | |
| | | | | KR | 10-2016-0137628 | A | |
| | | | | CA | 2959291 | A1 | |
| | | | | CN | 106573203 | A | |
| | | | | KR | 10-2019-0037350 | A | |
| JP | 1-176407 | A | 12 July 1989 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006082006 A
- JP 2010094670 A

**Non-patent literature cited in the description**

- *Journal of the Japanese Association for Petroleum Technology,* March 2010, vol. 75 (2), 164-176
- **S. L. MAYO ; B. D. OLAFSON ; W. A. GODDARD III.** *J. Phys. Chem.,* 1990, vol. 94, 8897
- **J. WANG ; R. M. WOLF ; J. W. CALDWELL ; P. A. KOLLMAN ; D. A. CASE.** *J. Comput. Chem.,* 2004, vol. 25, 1157
- **W. L. JORGENSEN ; D. S. MAXWELL ; JULIAN TIRADO-RIVES.** *J. Am. Chem. Soc.,* 1996, vol. 118, 11225
- **B. R. BROOKS ; R. E. BRUCCOLERI ; B. D. OLAFSON ; D. J. STATES ; S. SWAMINATHAN ; M. KARPLUS.** *J. Comput. Chem.,* 1983, vol. 4, 187
- **HOOVER, W. G.** *Phys. Rev. A,* 1985, vol. 31, 1695
- **H. C. ANDERSEN.** *J. Chem. Phys.,* 1980, vol. 72, 2384